# EUROPEAN PATENT SPECIFICATION

(11) **EP 0 598 515 B1**
(45) Date of publication and mention of the grant of the patent: **07.10.1998**
(21) Application number: 93308718.1
(22) Date of filing: 01.11.1993
(51) Int. Cl.: A01N 47/36

(54) **Method for herbicidal activity-enhancing, activity-enhanced herbicidal composition and activity-enhancing composition**
Verfahren zur Steigerung der heroiziden Wirksamkeit und herbizeiden Zusammensetzungen mit gesteigerter Wirksamkeit
Procédé pour augmenter l'activité herbicide et compositions herbicides à activité augmentée

(30) Priority: 18.11.1992 JP 351474/92; 25.12.1992 JP 361997/92; 10.02.1993 JP 62424/93; 06.04.1993 JP 115138/93
(43) Date of publication of application: 25.05.1994
(73) Proprietor: ISHIHARA SANGYO KAISHA LTD., Osaka-shi, Osaka (JP)
(72) Inventor: Hayashi, Kouji, c/o Ishihara Sangyo K. Ltd., Kusatsu-shi, Shiga (JP); Yoshii, Hiroshi, c/o Ishihara Sangyo K. Ltd., Kusatsu-shi, Shiga (JP); Yoshida, Tsunezo, c/o Ishihara Sangyo K. Ltd., Kusatsu-shi, Shiga (JP); Kuriyama, Yasuhide, c/o Ishihara Sangyo K. Ltd., Kusatsu-shi, Shiga (JP); Kanbayashi, Shigehisa, c/o Ishihara Sangyo K. Ltd., Kusatsu-shi, Shiga (JP)
(74) Representative: Pearce, Anthony Richmond

(56) References cited:
- EP-A- 0 313 317
- CHEMICAL ABSTRACTS, vol. 112, no. 5, 29 January 1990, Columbus, Ohio, US; abstract no. 32163c, & PL-A-146 446 (L. WALCERZ ET AL.) 28 February 1989
- PESTICIDE SCIENCE vol. 37, no. 2 , 1993 , BARKING GB pages 212 - 215 R.J. BUTSELAAR ET AL. 'new fatty amine based adjuvants: mode of action and applications' & SCI PESTICIDES GROUP SYMPOSIUM 3-7 August 1992, Churchill College, Cambridge University, Cambridge, UK
- CHEMICAL PATENTS INDEX, DOCUMENTATION ABSTRACTS JOURNAL Week 8923, Derwent Publications Ltd., London, GB; AN 89-169387 & JP-A-01 110 604 (ISHIHARA) 27 April 1989

## Description

The present invention relates to a technique to herbicidally activity-enhance a herbicidal composition containing a certain sulfonylurea type herbicidal active ingredient, at least one compound (hereinafter referred to as "the certain sulfonylurea type herbicidal active ingredient") selected from the group consisting of N-[(4,6-dimethoxypyrimidin-2-yl)aminocarbonyl]-3-dimethylaminocarbonyl-2-pyridinesulfonamide (hereinafter referred to as Compound A) and its salts and methyl 2-[[[4,6-bis(difluoromethoxy)pyrimidin-2-yl]aminocarbonyl]aminosulfonyl]benzoate (hereinafter referred to as Compound B) and its salts by using an ethoxylated fatty amine type surfactant and a vegetable oil and/or a mineral oil.

EP-A-313317 discloses that a suspension composition produced by mixing at least one compound selected from the group consisting of pyridinesulfonamide type compounds and their salts including compound A and its salt, with a vegetable oil and a surfactant in a specific ratio improves the herbicidal effect and reduces the amount of the herbicidal active ingredient to be used.

Aspects of Applied Biology, vol. 9, pp. 149-158, 1985 discloses that the herbicidal sulfonylurea type compound, Chlorsulfuron, is improved in its weed control effect by using an ethoxylated fatty alcohol type surfactant, and a mixture of an ethoxylated fatty amine type surfactant and an ethoxylated alkylphenol type surfactant.

Unexamined published Japanese patent application No. 161405/91 discloses that the chemical injury on crops can be reduced and the herbicidal effect can be increased by adding a composition selected from the group of composition 1 comprising an oil and a surfactant, composition 2 comprising a surfactant, composition 3 comprising a solvent and a combination thereof to a diluted liquid for application prepared by diluting a herbicidal composition containing urea type compound with water at the time of application.

Polish Patent No. 146446 discloses that the adjuvant comprising a specific mineral oil and an emulsifier increases effectiveness and stability of pesticide solutions, emulsions or suspensions.

EP-A-257686 discloses herbicidal or fungicidal composition containing an alkoxylated fatty amines, wherein the alkoxy part comprises ethyleneoxide and other alkyleneoxide, as an activity promoting additive and further discloses that the alkoxylated fatty amines increase the herbicidal effect of sulfonylurea type corn herbicide.

Further, Pesticide Science, vol. 37, pp. 212-215, 1993 discloses that the alkoxylated fatty amines mentioned above or a composition prepared by blending the alkoxylated fatty amines and a nonionic surfactant increases the herbicidal effect of the herbicide (trade name: Accent) containing compound A.

However, any of the publications described above does not specifically teach or suggest at all the technic to remarkably enhance the herbicidal effect of the certain sulfonylurea type herbicidal active ingredient by using the ethoxylated fatty amine type surfactant and the vegetable oil and/or the mineral oil.

To be specific, the present invention firstly provides a method for activity-enhancing a herbicidal composition containing the certain sulfonylurea type herbicidal active ingredient by using an ethoxylated fatty amine type surfactant and a vegetable oil and/or a mineral oil, or by using an ethoxylated fatty amine type surfactant, a vegetable oil and/or a mineral oil and other surfactant (hereinafter referred to as "the method for herbicidal activity-enhancing").

Secondly, the present invention provides an activity-enhanced herbicidal composition containing the certain sulfonylurea type herbicidal active ingredient, an ethoxylated fatty amine type surfactant and a vegetable oil and/or a mineral oil, or containing the certain sulfonyl-urea type herbicidal active ingredient, an ethoxylated fatty amine type surfactant, a vegetable oil and/or a mineral oil and other surfactant (hereinafter referred to as "the activity-enhanced herbicidal composition").

Thirdly, the present invention provides an activity-enhancing composition containing an ethoxylated fatty amine type surfactant and a vegetable oil and/or a mineral oil, or containing an ethoxylated fatty amine type surfactant, a vegetable oil and/or a mineral oil and other surfactant which is used as an activity-enhancing agent of a herbicidal composition containing the certain sulfonyl-urea type herbicidal active ingredient (hereinafter referred to as the "activity-enhancing composition").

And the present invention fourthly provides a method for herbicidal activity-enhancing, an activity-enhanced herbicidal composition and an activity-enhancing composition in the case where the herbicidal composition or the activity-enhanced herbicidal composition contains the certain sulfonylurea type herbicidal active ingredient and at least one other herbicidal active ingredient selected from the group consisting of 2,4-dichlorophenoxyacetic acid, its alkyl esters and its salts; 3,6-dichloro-2-methoxybenzoic acid and its salts, 2-chloro-4-ethylamino-6-isopropylamino-s-triazine, 3-(1-methylethyl)-1H-2,1,3-benzothiadiazin-4(3H)-one-2,2-dioxide, 2-chloro-2',6'-diethyl-N-(methoxymethyl)acetanilide, 2-chloro-6'-ethyl-N-(2-methoxy-1-methylethyl)aceto-o-toluidide, 2-chloro-N-isopropylacetanilide, N-(1-ethylpropyl)-2,6-dinitro-3,4-xylidine, 2-(3,5-dichlorophenyl)-2-(2,2,2-trichloroethyl)-oxirane, 3,5-dibromo-4-hydroxybenzonitrile, its carboxylic acid esters and its salts, 5,7-dimethyl-N-(2,6-dichlorophenyl)-1,2,4-triazolo[1,5-a]pyrimidine-2-sulfonamide, 2-chloro-N-(ethoxymethyl)-2'-ethyl-6'-methylacetanilide, O-(6-chloro-3-phenyl-4-pyridazinyl) S-octylcarbonothioate, 1-(4,6-dimethoxypyrimidin-2-yl)-3-(3-ethylsulfonyl-2-pyridylsulfonyl)urea and its salts, 2-[2-chloro-4-(methylsulfonyl)benzoyl]-1,3-cycohexanedione and its salts, methyl 3-chloro-5-(4,6-dimethoxypyrimidin-2-ylcarbamoylsulfamoyl)-1-methylpyrazole-4-carboxylate and its salts and 3-(3,4-dichlorophenyl)-1-methoxy-1-methylurea (hereinafter referred to as "the other herbicidal active ingredient").

The method for herbicidal activity-enhancing of the present invention can be exploited, in general, by mixing the certain sulfonylurea type herbicidal active ingredient with various kinds of adjuvants for agricultural preparation to prepare in a various type of formulations as a herbicidal composition, by adding appropriate amounts of an ethoxylated fatty amine type surfactant, a vegetable oil and/or a mineral oil and water, and other surfactant, if necessary, to the herbicidal composition at the time of application of the herbicidal composition, and by applying it. The herbicidal composition containing the certain sulfonylurea type herbicidal active ingredient can be prepared in accordance with the generally applicable methods for agricultural preparations.

The activity-enhancing composition of the present invention can be also exploited, in general, by adding it with water to the herbicidal composition containing the certain sulfonylurea type herbicidal active ingredient prepared by the same manner mentioned above, and by applying it. The activity-enhancing composition of the present invention can be prepared, in general, by mixing an ethoxylated fatty amine type surfactant and a vegetable oil and/or a mineral oil, and other surfactant and various kinds of adjuvants for agricultural preparation, if necessary.

The activity-enhanced herbicidal composition of the present invention can be exploited by mixing an ethoxylated fatty amine type surfactant, a vegetable oil and/or a mineral oil and the certain sulfonylurea type herbicidal active ingredient, and other surfactant and various kinds of adjuvants for agricultural preparation, if necessary, to prepare into various formulations, and by applying them with or without diluting with water.

In the case of containing other herbicidal active ingredient in the present invention, the herbicidal composition or the activity-enhanced herbicidal composition, prepared together with the certain sulfonylurea type herbicidal active ingredient and other herbicidal active ingredient in accordance with the same manner mentioned above, can be applied or alternatively the herbicidal composition or the activity-enhanced herbicidal composition containing the certain sulfonylurea type herbicidal active ingredient and a herbicidal composition containing the other herbicidal active ingredient, each of which were separately prepared in accordance with the same manner mentioned above, can be jointly applied, for example, by mixing together at the time of application known as a tank-mixing manner.

The certain sulfonylurea type herbicidal active ingredient of the present invention is, as defined hereinbefore, at least one compound selected from the group consisting of compound A: N-[(4,6-dimethoxypyrimidin-2-yl)aminocarbonyl]3-dimethylaminocarbonyl-2-pyridinesulfonamide (common name: nicosulfuron) and its salts and compound B: methyl 2-[[[4,6-bis(difluoromethoxy)pyrimidin-2-yl]aminocarbonyl]aminosulfonyl]benzoate (common name: primisulfuron-methyl) and its salts. Among those, compound A and/or its salts is preferable and compound A is more preferable.

The salts of compounds A and B include, for example, an alkali metal salt such as a sodium salt or a potassium salt, an alkaline earth metal salt such as a magnesium salt or a calcium salt, an amine salt such as a monomethyl amine salt, a dimethyl amine salt or a triethyl amine salt, etc.

The preferable ethoxylated fatty amine type surfactant used in the present invention includes, for example, ethoxylated tallow amine type, ethoxylated soy amine type, ethoxylated coco amine type, etc., more preferably, ethoxylated tallow amine type. Ethylene oxide of the ethoxylated fatty amine type surfactant is preferably 5 to 20 mols on the average per mol of the surfactant.

The ethoxylated fatty amine type surfactant to be used in the present invention includes specifically Frigate, Ethylan TT-15, Genamin T-150, Genamin T-200, Ethomeen T-25, Sorpol 7553, Sorpol 7409, New Kalgen D-3615T, etc., as the ethoxylated tallow amine type surfactant, Sorpol 7721, New Kalgen D-3605, etc., as the ethoxylated soy amine type surfactant, and Sorpol 7376, New Kalgen D-3110, Ethomeen C-12, etc., as the ethoxylated coco amine type surfactant. Every example of the surfactant enumerated above is trade name. Frigate is produced by ISK Biotech; Genamin T-150 and T-200 are produced by Hoechst; Sorpol 7553, 7409, 7721 and 7376 are produced by Toho Chemical Industry; New Kalgen D-3615T, D-3605 and D-3110 are produced by Takemoto Oils and Fats; Ethylan TT-15, Ethomeen T-25 and C-12 are described in Weed Research, vol. 20, pp. 139-146, 1980, and Ethylan TT-15 is also described in Zizaniology, vol. 2, pp. 183-189, 1990.

The vegetable oil to be used in the present invention includes, for example, olive oil, kapok oil, castor oil, papaya oil, camellia oil, coconut oil, sesame oil, corn oil, rice bran oil, peanut oil, rapeseed oil, cottonseed oil, soybean oil, linseed oil, tung oil, sunflower oil and safflower oil and fatty acids originated therefrom and alkylesters of the fatty acids, etc., and the mineral oil to be used incudes paraffin such as liquid paraffin, paraffin petroleum, etc. The oils exemplified above can be also used as a mixture thereof, if necessary.

Preferable oils to be used are vegetable oils such as corn oil, rapeseed oil, cottonseed oil, soybean oil, sunflower oil and safflower oil and fatty acids originated therefrom and alkylesters of the fatty acids, more preferable are corn oil and rapeseed oil.

The fatty acid mentioned above includes, for example, C₁₂₋₂₂ saturated or unsaturated fatty acid such as lauric acid, palmitic acid, stearic acid, oleic acid, linoleic acid, linolenic acid, erucic acid, brassidic acid, etc. and the alkylesters thereof include, for example, C₁₋₁₈ straight or branched chain alkylester such as methylester, butylester, isobutylester, oleylester, etc.

In the present invention, other surfactantsexcept the ethoxylated fatty amine type surfactant can be used, if necessary. As the additional use of such other surfactants may improve the water-dispersibility of the vegetable oil and/or the mineral oil, it is preferable in the case of application by diluting the herbicidal composition containing the certain sulfonylurea type herbicidal active ingredient or the activity-enhanced herbicidal composition with water. Thus, the additional use of such other surfactant mentioned above is one of the preferred embodiment. Such other surfactant may be used by premixing with the ethoxylated fatty amine type surfactant or the vegetable oil and/or the mineral oil or by incorporating in the activity-enhanced herbicidal composition or the activity-enhancing composition at the time of preparation thereof.

Such other surfactants which can be used in the present invention, specifically, include, for example, alkyl sulfonates, alkylbenzene sulfonates, lignin sulfonates, polyoxyethylene glycol alkyl ethers, polyoxyethylene lauryl ethers, polyoxyethylene alkyl ethers, polyoxyethylene alkylaryl ethers, polyoxyethylene fatty acid esters, polyoxypropylene fatty acid esters, polyoxyethylene sorbitan fatty acid esters; polyoxyethylene styryl phenyl ethers, polycarboxylates; dialkylsulfosuccinates, alkyl diglycol ether sulfates, polyoxyethylene alkylaryl ether sulfates, salt of polyoxyethylene alkylaryl phosphoric acid esters, polyoxyethylene hydrogenated castor oils, styrylphenyl phosphates, condensates of naphthalene sulfonate with formalin, benzoates, fatty acid polyglycerides, glycerin fatty acid esters, sorbitan monooleates, polyoxyethylene sorbitan monolaurates, fatty acid alcohol polyglycol ethers, etc. The surfactants exemplified above can be also used as a mixture thereof, if necessary.

Further, in the present invention, a solvent can be used, if necessary. Such solvent may be used by premixing with the ethoxylated fatty amine type surfactant or the vegetable oil and/or the mineral oil or by incorporating in the activity-enhanced herbicidal composition or the activity-enhancing composition at the time of preparation thereof.

Still further, in the present invention, anti-settling agent, anti-foam, anti-oxidant, etc. can be used, if necessary, in the same manner of the solvent mentioned above.

The solvent which can be used in the present invention, specifically, includes, for example, alcohols such as propanol and isobutanol; ethers such as dioxane; ketones such as cyclohexanone and methylisobutylketone; fatty acids such as acetic acid and butyric acid; esters such as isopropylacetate and butylacetate; nitrogen- or sulfur-containing solvent such as N-methylformamide, N-methylpyrrolidone, dimethylsulfoxide and 1,3-dimethyl-2-imidazolidinone; water; aliphatic hydrocarbons such as normal paraffin and isoparaffin; aromatic hydrocarbons such as benzene, alkylbenzene, naphthalene, alkylnaphthalene, diphenyl and phenylxylylethane; etc., and the anti-settling agent includes, specifically, silica, bentonite-alkylamino complex, bentonite, white carbon, aluminum magnesium silicate, etc. Each of the solvents and the anti-settling agents exemplified above can be also used, respectively, as a mixture thereof, if necessary.

The mixing volume ratio of the ethoxylated fatty amine type surfactant and the vegetable oil and/or the mineral oil of the present invention is generally selected in the range of 27:1 to 1:16, preferably 6:1 to 1:16, more preferably 4:1 to 1:8, and most preferably 4:1 to 1:4.

In the case of incorporating the other surfactant, the solvent, the anti-settling agent, anti-foam, anti-oxidant, etc. in the present invention, the mixing ratio thereof are generally as follows:

The other surfactant is 1 to 30 parts by weight, preferably 2 to 20 parts by weight, the solvent is 0.5 to 30 parts by weight, preferably 1 to 20 parts by weight and the anti-settling agent, anti-foam or anti-oxidant is 0.05 to 10 parts by weight, preferably 0.1 to 5 parts by weight when the whole weight of (1) the ethoxylated fatty amine type surfactant, (2) the vegetable oil and/or the mineral oil, (3) the activity-enhanced herbicidal composition or (4) the activity-enhancing composition, wherein each of (1) to (4) includes the other surfactant, the solvent, the anti-settling agent, anti-foam, anti-oxidant, etc. is calculated as 100 parts by weight, respectively.

The activity-enhancing composition of the present invention is generally liquid at ordinary temperature, however, the composition can be solidified using an oil-absorbent, and various kinds of adjuvants for agricultural preparations, if necessary, and subsequently granulated, if necessary, for the practical use.

The oil-absorbent used includes, for example, white carbon, hydrolyzed starch, kaolin , clay, talc, diatomaceous earth, an artificially synthesized product of diatomaceous earth and lime, asbestos, a mixture of kaolinite and sericite, calcium silicate, calcium carbonate, calcium carbonate silicate, acid clay, carbon black, graphite, pearlite, alumina, titanium dioxide, basic magnesium carbonate, magnesium silicate aluminate, silica·alumina filler, magnesium silicate hydrate, etc. The oil-absorbent exemplified above can be also used as a mixture thereof, if necessary. Amount of the oil-absorbent to be used is properly selected in the range of its ordinary use.

In the case that the activity-enhancing composition of the present invention is liquid, it can be converted to a gel using a gelling agent and various kinds of adjuvants for agricultural preparations, if necessary, and subsequently be wrapped with a water-soluble film, if necessary, for the practical use.

The gelling agent used includes, for example, silica, organic attapulgite, clay, hydrogenated castor oil, higher fatty acid, higher alcohol, salt of dialkylsulfosuccinic acid ester, benzoate, alkyl sulfate, a mixture of water and polyacrylic polymer or polyacrylic co-polymer, 12-hydroxystearic acid, etc. The gelling agent exemplified above can be also used as a mixture thereof, if necessary. Amount of the gelling agent to be used varies depending on the kind of the gelling agent, however, 0.1 to 50 parts by weight of the gelling agent is generally used when the whole weight of the activity-enhancing gel composition is calculated as 100 parts by weight.

In the present invention, the ethoxylated fatty amine type surfactant and the vegetable oil and/or the mineral oil, both of which are generally liquid at ordinary temperature, also can be converted to a solid or a gel by the same manner mentioned above using various kinds of adjuvants for agricultural preparations, if necessary, for the practical use.

In the case of enhancing the herbicidal activity of the herbicidal composition containing the certain sulfonylurea type herbicidal active ingredient in the present invention, in general, the herbicidal composition is diluted with 50 to 2,000 liters/hectare of water, preferably 100 to 1,000 liters/hectare of water which contains (1) the total volumes of the liquid ethoxylated fatty amine type surfactant and the vegetable oil and/or the mineral oil or (2) the liquid activity-enhancing composition in the range of from 0.01 to 5% by volume, preferably from 0.02 to 2% by volume, and is applied.

In the case that the ethoxylated fatty amine type surfactant and the vegetable oil and/or the mineral oil are solid or gel, or the activity-enhancing composition is solid or gel, the amount of the ethoxylated fatty amine type surfactant and the vegetable oil and/or the mineral oil to be used is the same with the liquid case mentioned above.

In the present invention, other herbicidal active ingredient can be used in addition to the sulfonylurea type herbicidal active ingredient, if necessary, by which it is expected to broaden the kinds of weeds to be controlled and to exhibit a synergistical herbicidal effect.

As such other herbicidal active ingredient, following herbicidal active ingredients are exemplified. One or more of such other herbicidal active ingredients can be used together with the sulfonylurea type herbicidal active ingredient, preferably compound A and/or its salt. Two or more of other herbicidal active ingredients can be used either in a common formulation prepared together in advance or in an independent formulation prepared separately and in a mixture blended at the time of application.
- 2,4-dichlorophenoxyacetic acid (common name: 2,4-D), its alkylesters and its salts
- 3,6-dichloro-2-methoxybenzoic acid (common name: dicamba) and its salts
- 2-chloro-4-ethylamino-6-isopropylamino-s-triazine (common name: atrazine)
- 3-(1-methylethyl)-1H-2,1,3-benzothiadiazin-4 (3H)-one-2,2-dioxide (common name: bentazone)
- 2-chloro-2',6'-diethyl-N-(methoxymethyl)acetanilide (common name: alachlor)
- 2-chloro-6'-ethyl-N-(2-methoxy-1-methylethyl)aceto-o-toluidide (common name: metolachlor)
- 2-chloro-N-isopropylacetanilide (common name: propachlor)
- N-(1-ethylpropyl)-2,6-dinitro-3,4-xylidine(common name: pendimethalin)
- 2-(3,5-dichlorophenyl)-2-(2,2,2-trichloroethyl) oxirane (common name: tridiphane)
- 3,5-dibromo-4-hydroxybenzonitrile (common name: bromoxynil), its carboxylic acid esters and its salts
- 5,7-dimethyl-N-(2,6-dichlorophenyl)-1,2,4-triazolo-[1,5-a]pyrimidine-2-sulfonamide (D489: a compound described in Plant Physiology, 1990, vol. 93, pp. 962-966)
- 2-chloro-N-(ethoxymethyl)-2'-ethyl-6'-methylacetanilide (common name: acetochlor)
- O-(6-chloro-3-phenyl-4-pyridazinyl) S-octylcarbono-thioate (common name: pyridate)
- 1-(4,6-dimethoxypyrimidin-2-yl)-3-(3-ethylsulfonyl-2-pyridylsulfonyl)urea (DPX-E9636: a compound described in Short Review of Herbicides & PGRs, 1991, p. 94) and its salts
- 2-[2-chloro-4-(methylsulfonyl)benzoyl]-1,3-cyclohexanedione (common name: sulcotrione) and its salts
- methyl 3-chloro-5-(4,6-dimethoxypyrimidin-2-ylcarbamoyl-sulfamoyl)-1-methylpyrazole-4-carboxylate (NC-319: a compound described in Brighton Crop Protection Conference-Weeds-1991, p. 31) and its salts
- 3-(3,4-dichlorophenyl)-1-methoxy-1-methylurea (common name: linuron)

The salts contained in such other herbicidal active ingredient mentioned above include, for example, an alkali metal salt such as a sodium salt or a potassium salt, an alkaline earth metal salt such as a magnesium salt or a calcium salt, an amine salt such as a monomethyl amine salt, a dimethylamine salt, a triethylamine salt, a diol amine salt or a trol amine salt, an ammonium salt or a dimethyl ammonium salt. The alkyl esters mentioned above include , for example, an ethyl ester, a butyl ester, a heptyl ester, an octyl ester, an isooctyl ester or a butoxyethyl ester, and the carboxylic acid esters mentioned above include , for example, a butanoic acid ester, a heptanoic acid ester or an octanoic acid ester.

Among such other herbicidal active ingredients exemplified above, 2,4-D, its alkyl esters and its salts, dicamba and its salts, bromoxynil, its carboxylic acid esters and its salts, pyridate, and sulcotrione and its salts are preferable, and 2,4-D, its alkyl estersand its salts, and bromoxynil, its carboxylic acid esters and its salts are more preferable.

The herbicidal composition of the present invention containing the certain sulfonylurea type herbicidal active ingredient can be prepared, in accordance with the generally applicable methods for agricultural preparations, into the formulations of wettable powder, water dispersible granules, oil-based suspension concentrate, paste formulation, gel formulation (in which sol particles, which are dispersion solutions of fine-grains, are linked to constitute networks and thereby a viscosity of the whole of the solution is increased), etc. by mixing the herbicidal active ingredient with a various kinds of adjuvants for agricultural preparations and other herbicidal active ingredient, if necessary, for the practical use. Among such type of formulations, water dispersible granules, oil-based suspension concentrate and gel formulation are preferable and oil-based suspension concentrate is more preferable.

Also, the activity-enhanced herbicidal composition of the present invention can be prepared into the same type of formulations mentioned above by mixing the ethoxylated fatty amine type surfactant, the vegetable oil and/or the mineral oil and the certain sulfonylurea type herbicidal active ingredient and, if necessary, other surfactant, a various kinds of adjuvants for agricultural preparations and other herbicidal active ingredient. Among such formulations, oil-based suspension concentrate and gel formulation are preferable and oil-based suspension is more preferable.

The mixing ratio of the components for the preparation of the activity-enhanced herbicidal composition of the present invention varies depending on the type of formulations, however, in general, 1 to 65 parts by weight of the ethoxylated fatty amine type surfactant, 1 to 95 parts by weight of the vegetable oil and/or the mineral oil and 0.02 to 81 parts by weight of the certain sulfonylurea type herbicidal active ingredient are mixed. When the other surfactant is additionally contained, the mixing ratio thereof is 0.005 to 45 parts by weight, when a various kinds of adjuvants for agricultural preparations are contained, the mixing ratio thereof is 0.005 to 90 parts by weight, and when the other herbicidal active ingredient is additionally contained, the mixing ratio thereof is 0.02 to 81 parts by weight, when the whole weight of the activity-enhanced herbicidal composition is calculated as 100 parts by weight.

The activity-enhanced herbicidal composition prepared is applied by diluting with 50 to 2,000 liters/hectare, preferably 100 to 1,000 liters/hectare of water, however it may be applied directly without water depending on the type of formulation.

The adjuvants for agricultural preparations can be selected from conventional adjuvants used in the field of agricultural chemicals. Such adjuvants include, for example, anionic surfactants such as salts of fatty acids, alkyl sulfosuccinates, salts of alkyl sulfuric acid esters, alkyl sulfates, alkylaryl sulfates, salts of alcohol sulfuric acid esters, aryl sulfonates, alkyl diphenyl ether disulfonates, polystyrene sulfonates, salts of alkyl phosphoric acid esters, alkylaryl phosphates, salts of polyoxyethylene alkylether sulfuric acid esters, salts of polyoxyethylene aryl ether sulfuric acid esters, salts of polyoxyethylene alkylaryl ether sulfuric acid ester:, polyoxyethylene alkylether phosphates, etc.; nonionic surfactants such as acetylene glycols, acetylene alcohols, oxyalkylene block polymers, polyoxyethylene glycerine fatty acid esters, etc.; solid carrierssuch as diatomaceous earth, slaked lime, calcium carbonate, talc, white carbon, kaolin , bentonite, a mixture of kaolinite and sericite, starch, sodium carbonate, sodium bicarbonate, mirabilite, clay, zeolite, etc.; thickeners such as carboxymethylcellulose, xanthanegum, etc.; inorganic salts such as mirabilite, sodium chloride, ammonium phosphate, etc.; fillers such as bentonite, sugar, etc.; binders such as lignosulfonate, starch, etc.; urea; dispersion stabilizers; phytotoxicity reducing agents; antimold agents; disinte-grators; etc., in addition to the vegetable oil, the mineral oil, the other surfactant, the solvent, the anti-settling agent, the anti-foam, the anti-oxidant, the oil-absorbent and the gelling agent all of which are described herein-before. The adjuvants exemplified above can be also used as a mixture thereof.

Among the preferable type of formulations, described above, of the herbicidal composition containing the certain sulfonylurea type herbicidal active ingredient and the activity-enhanced herbicidal composition in the present invention, in particular, (1) the method for herbicidal activity-enhancing of water dispersible granules containing compound A and/or its salt, (2) the method for herbicidal activity-enhancing of herbicidal oil-based suspension or herbicidal gel composition containing compound A and/or its salt, (3) the herbicidally activity-enhanced oil-based suspension containing the ethoxylated fatty amine type surfactant, compound A and/or its salt, the vegetable oil and/or the mineral oil and the other surfactant (hereinafter referred to as the activity-enhanced herbicidal oil-based suspension) and (4) the herbicidally activity-enhanced gel composition containing the ethoxylated fatty amine type surfactant, compound A and/or its salt, the vegetable oil and/or the mineral oil, the other surfactant and the gelling agent (hereinafter referred to as the activity-enhanced herbicidal gel composition) are preferable. Needless to say, each of these can contain the other herbicidal active ingredient.

The method for herbicidal activity-enhancing of water dispersible granules containing compound A and/or its salt mentioned above will be specifically described below.

The water dispersible granules containing compound A and/or its salt can be prepared, in general, by mixing compound A and/or its salt and the various kinds of adjuvants for agricultural preparations, granulating and grading.

The various kinds of adjuvants for agricultural preparations to be used may be appropriately selected from the adjuvants described above, preferably, the adjuvants such as the other surfactant, the anionic surfactant, the nonionic surfactant, the solid carrier, the binder, the filler, etc. are to be contained usually.

To prepare the water dispersible granules, 0.5 to 90 parts by weight, preferably 2 to 85 parts by weight of compound A and/or its salt, 0.1 to 50 parts by weight, preferably 1 to 30 parts by weight of at least one of the surfactant selected from the group consisting of the other surfactant, the anionic surfactant and the nonionic surfactant, optionally 0.1 to 98.9 parts by weight, preferably 0.5 to 50 parts by weight of at least one of those selected from the group consisting of the solid carrier, the binder and the filler, and optionally 0.5 to 90 parts by weight, preferably 0.5 to 85 parts by weight of the other herbicidal active ingredient are used, when the whole weight of the water dispersible granules is calculated as 100 parts by weight.

The water dispersible granules prepared is applied, in general, by diluting with water containing the ethoxylated fatty amine type surfactant and the vegetable oil and/or the mineral oil or the activity-enhancing composition as described hereinbefore.

In the case of preparing the activity-enhanced water dispersible granules wherein the ethoxylated fatty amine type surfactant and the vegetable oil and/or the mineral oil are contained in advance, 5 to 90 parts by weight, preferably 10 to 85 parts by weight of the water dispersible granules containing compound A and/or its salt is mixed with 1 to 50 parts by weight, preferably 5 to 30 parts by weight of the ethoxylated fatty amine type surfactant, 1 to 50 parts by weight, preferably 5 to 30 parts by weight of the vegetable oil and/or the mineral oil, and optionally 1 to 90 parts by weight, preferably 5 to 80 parts by weight of the oil-absorbent, when the whole weight of the herbicidally activity-enhanced water dispersible granules is calculated as 100 parts by weight.

The method for herbicidal activity-enhancing of herbicidal oil-based suspension containing compound A and/or its salt mentioned above and the activity-enhanced herbicidal oil-based suspension of the present invention will be specifically described below.

The herbicidal oil-based suspension containing compound A and/or its salt can be prepared, in general, either by mixing uniformly compound A and/or its salt, the vegetable oil and/or the mineral oil, the other surfactant, and optionally the various kinds of adjuvants for agricultural preparations and the other herbicidal active ingredient, or by mixing any components in advance and subsequently mixing these with the rest of the components, as an oil-based suspension concentrate, where the components mixed can be subjected to wet-grinding, if necessary.

The activity-enhanced herbicidal oil-based suspension of the present invention can be prepared by the same manner with the preparation of the herbicidal oil-based suspension containing compound A and/or its salt described above except for adding the ethoxylated fatty amine type surfactant at the time of preparation as an oil-based suspension concentrate.

The various kinds of adjuvants for agricultural preparations to be used may be appropriately selected from the adjuvants described hereinbefore, preferably the adjuvants such as the anti-settling agent, the solvent, urea, etc. are to be contained usually.

To prepare the herbicidal oil-based suspension containing compound A and/or its salt and the activity-enhanced herbicidal oil-based suspension, 0.5 to 20 parts by weight, preferably 2 to 6 parts by weight of compound A and/or its salt, 14.4 to 90 parts by weight, preferably 19 to 85 parts by weight of the vegetable oil and/or the mineral oil, 5 to 25 parts by weight, preferably 8 to 15 parts by weight of the other surfactant, optionally 0.1 to 70 parts by weight, preferably 0.5 to 50 parts by weight of the various kinds of adjuvants for agricultural preparations, and optionally 0.5 to 75 parts by weight, preferably 0.5 to 50 parts by weight of the other herbicidal active ingredient are used, and in the case of preparing the activity-enhanced herbicidal oil-based suspension wherein the ethoxylated fatty amine type surfactant is contained in advance, 3.9 to 65 parts by weight, preferably 7 to 45 parts by weight of the ethoxylated fatty amine type surfactant is used, when the whole weight of the herbicidal oil-based suspension or the activity-enhanced herbicidal oil-based suspension is calculated as 100 parts by weight.

The herbicidal oil-based suspension containing compound A and/or its salt prepared is applied, in general, by diluting with 50 to 2,000 liters/hectare, preferably 100 to 1,000 liters/hectare of water containing 0.01 to 1% by volume, preferably 0.05 to 0.5% by volume of the ethoxylated fatty amine type surfactant.

The activity-enhanced herbicidal oil-based suspension is applied either by diluting with water, wherein the amount of the water may be the same as described above, or directly without diluting with water, which is said as ultra low volume spraying method, wherein the activity-enhanced herbicidal oil-based suspension is prepared in accordance with the conventional method for agricultural preparation as a formulation for ultra low volume spraying.

The method for activity-enhancing the herbicidal gel composition containing compound A and/or its salt and the activity-enhanced herbicidal gel composition of the present invention will be specifically described below.

The herbicidal gel composition containing compound A and/or its salt can be prepared, in general, either by mixing uniformly compound A and/or its salt, the vegetable oil and/or the mineral oil, the other surfactant, the gelling agent, and optionally the various kinds of adjuvants for agricultural preparations and the other herbicidal active ingredient, or by mixing any components in advance and subsequently mixing these with the rest of the components, as a gel formulation, where the mixed components can be heated, if necessary.

The activity-enhanced herbicidal gel composition of the present invention can be prepared by the same manner with the preparation of the herbicidal gel composition containing compound A and its salt described above except for adding the ethoxylated fatty amine type surfactant at the time of the preparation, as a gel formulation.

The various kinds of adjuvants for agricultural preparations to be used may be appropriately selected from the adjuvants described hereinbefore, preferably the adjuvants such as the anti-settling agent, the solvent, urea, etc. are to be contained usually.

To prepare the herbicidal gel composition containing compound A and/or its salt and the activity-enhanced herbicidal gel composition, 0.5 to 20 parts by weight, preferably 1 to 6 parts by weight of compound A and/or its salt, 10 to 93.8 parts by weight, preferably 20 to 85 parts by weight of the vegetable oil and/or the mineral oil, 2 to 25 parts by weight, preferably 2 to 15 parts by weight of the other surfactant, 0.1 to 50 parts by weight, preferably 5 to 40 parts by weight of the gelling agent, optionally 0.1 to 70 parts by weight, preferably 0.5 to 50 parts by weight of the various kinds of adjuvants for agricultural preparations, and optionally 0.5 to 75 parts by weight, preferably 0.5 to 50 parts by weight of the other herbicidal active ingredient are used, and in the case of preparing the activity-enhanced herbicidal gel composition wherein the ethoxylated fatty amine type surfactant is contained in advance, 3 to 65 parts by weight, preferably 5 to 45 parts by weight of the ethoxylated fatty amine type surfactant is used, when the whole weight of the herbicidal gel composition or the activity-enhanced herbicidal gel composition is calculated as 100 parts by weight.

The herbicidal gel composition containing compound A and/or its salt prepared is applied, in general, by diluting with 50 to 2,000 liters/hectare, preferably 100 to 1,000 liters/hectare of water containing 0.01 to 2% by volume, preferably 0.05 to 1% by volume of the ethoxylated fatty amine type surfactant.

The activity-enhanced herbicidal gel composition is generally applied by diluting with water wherein the amount of the water may be the same as described above.

In the present invention, the herbicidal composition containing the certain sulfonylurea type herbicidal active ingredient and the activity-enhanced herbicidal composition prepared in the form of water dispersible granules, wettable powder, paste formulation or gel formulation can be put in various containers for use by wrapping with water-soluble film, etc. The used containers can be simply destroyed by fire or can be used again since the containers are prevented from contacting directly with agricultural chemicals. The preparation put in a container by wrapping with water-soluble film, etc. can be easily taken out by tipping the container or by supplying air into the container, and subsequently the preparation is easily dispersed in water. Such use, therefore, is effective to apply the preparation by diluting with water or water containing the ethoxylated fatty amine type surfactant and the vegetable oil and/or the mineral oil.

The herbicidal composition containing the certain sulfonylurea type herbicidal active ingredient which was activity-enhanced by the method for herbicidal activity-enhancing of the present invention and the activity-enhanced herbicidal composition of the present invention can control, by foliar application, a wide range of weeds including sedges (or Cyperaceae), such as rice flatsedge (Cyperus iria L.) and purple nutsedge (Cyperus rotundus L.); grasses (or gramineae) such as barnyardgrass (Echinochloa crus-galli L.) crabgrass (Digitaria sanguinalis L.), green foxtail (Setaria viridis L.), goose grass (Eleusine indica L.), wild oat (Avena fatua L.), johnsongrass (Sorghum halepense L.) and quackgrass (Agropyron repens L.); and broadleaves such as velvetleaf (Abutilon theophrasti MEDIC.), tall morningglory (Ipomoea purpurea L.), common lambsquarters (Chenopodium album L.), prickly sida (Sida spinosa L.), common purslane (Portulaca oleracea L.), slender amaranth (Amaranthus viridis L.), sicklepod (Cassia obtusifolia L.), black nightshade (Solanum nigrum L.), pale smartweed (Polygonum lapathifolium L.), common chickweed (Stellaria media L.), common cocklebur (Xanthium strumarium L.), flexuous bittercress (Cardamine flexuosa WITH.), henbit (Lamium amplexicaule L.) and threeseeded copperleaf (Acalypha australis L.). Therefore, the herbicidal composition of the present invention can be applicable for extended areas, for example, crop lands such as orchards and mulberry fields, and non-crop lands such as forests, farm roads, playgrounds, factory sites and turf fields in addition to upland farms.

In particular, the herbicidal composition containing the certain sulfonylurea type herbicidal active ingredient as described above and the activity-enhanced herbicidal composition of the present invention can control noxious weeds without giving any chemical injury to corn and, therefore, can be very effective for use in corn fields. Further, the herbicidal composition of the present invention can be used as a mixture together with or in combination with other agricultural chemicals, fertilizers, safeners, etc. and by these uses, more excellent effect and action can be expected.

The present invention will be described with reference to examples below. It should be noted, however, that the present invention is not limited to these examples.

Examples of the method for herbicidally activity-enhancing wettable powder and water dispersible granules containing the certain sulfonylurea type herbicidal active ingredient are as follows:

### EXAMPLE 1

| | |
|---|---|
| (1) Compound A (purity 93.8%) | 82.4 parts by weight |
| (2) Sodium alkylnaphthalene sulfonate condensate (trade name: Supragil MNS/90; produced by Rhone-Poulenc) | 5.0 parts by weight |
| (3) Sodium dodecylbenzene sulfonate (trade name: Rhodacal LDS-10; produced by Rhone-Poulenc) | 4.0 parts by weight |
| (4) Mirabilite | 8.6 parts by weight |

Above components were mixed uniformly and water was added to the mixture to knead further. The mixture was subjected to extruding granulation. After drying and grading, water dispersible granules was obtained.

The preparation obtained is applied by diluting with water containing an ethoxylated fatty amine type surfactant, a vegetable oil and/or a mineral oil and other surfactant.

### EXAMPLE 2

| | |
|---|---|
| (1) Compound A (purity 93.8%) | 82.8 parts by weight |
| (2) Supragil MNS/90 (trade name) | 5.0 parts by weight |
| (3) Rhodacal LDS-10 (trade name) | 4.0 parts by weight |
| (4) Bentonite | 8.2 parts by weight |

Above components were mixed uniformly and water was added to the mixture to knead further. The mixture was subjected to extruding granulation. After drying and grading, water dispersible granules was obtained.

The preparation obtained is applied by diluting with water containing an ethoxylated fatty amine type surfactant, a vegetable oil and/or a mineral oil and other surfactant.

### EXAMPLE 3

| | |
|---|---|
| (1) Compound A (purity 93.8%) | 82.8 parts by weight |
| (2) Supragil MNS/90 (trade name) | 5.0 parts by weight |
| (3) Sodium dodecylbenzene sulfonate (trade name: Neogen Powder; produced by Daiichi Kogyo Seiyaku) | 12.2 parts by weight |

Above components were mixed uniformly and water was added to the mixture to knead further. The mixture was subjected to extruding granulation. After drying and grading, water dispersible granules was obtained.

The preparation obtained is applied by diluting with water containing an ethoxylated fatty amine type surfactant, a vegetable oil and/or a mineral oil and other surfactant.

### EXAMPLE 4

| | |
|---|---|
| (1) Compound A | 81.5 parts by weight |
| (2) Salt of polyoxyethylene tristyrylphenol sulfuric acid ester (trade name: Soprophor 4D384; produced by Rhone-Poulenc) | 2.0 parts by weight |
| (3) Polycarboxylate (trade name: Geropon T/36; produced by Rhone-Poulenc) | 3.0 parts by weight |
| (4) Supragil MNS/90 (trade name) | 5.0 parts by weight |
| (5) Sodium alkylnaphthalene sulfonate (trade name: Supragil WP; produced by Rhone-Poulenc) | 2.0 parts by weight |
| (6) Clay (trade name: Wetting Clay; produced by Todoroki Sangyo) | 6.5 parts by weight |

Above components are mixed to obtain wettable powder.

The preparation obtained is applied by diluting with water containing an ethoxylated fatty amine type surfactant and a vegetable oil and/or a mineral oil.

### EXAMPLE 5

| | |
|---|---|
| (1) Compound A | 52.3 parts by weight |
| (2) Polycarboxylate (trade name: Geropon SC/211; produced by Rhone-Poulenc) | 8.0 parts by weight |
| (3) Supragil WP (trade name) | 4.0 parts by weight |
| (4) Wetting Clay (trade name) | 35.7 parts by weight |

Above components are mixed to obtain wettable powder.

The preparation obtained is applied by diluting with water containing an ethoxylated fatty amine type surfactant, a vegetable oil and/or a mineral oil and other surfactant.

### EXAMPLE 6

| | |
|---|---|
| (1) Compound A (purity 93.8%) | 82.4 parts by weight |
| (2) Supragil MNS/90 (trade name) | 5.0 parts by weight |
| (3) Neogen Powder (trade name) | 10.6 parts by weight |
| (4) Lignosulfonate | 2.0 parts by weight |

Above components were mixed uniformly and water was added to the mixture to knead further. The mixture was subjected to extruding granulation. After drying and grading, water dispersible granules was obtained.

The preparation obtained is applied by diluting with water containing an ethoxylated fatty amine type surfactant, a vegetable oil and/or a mineral oil and other surfactant.

### EXAMPLE 7

| | |
|---|---|
| (1) Compound A (purity 93.15%) | 82.98 parts by weight |
| (2) Supragil MNS/90 (trade name) | 5.0 parts by weight |
| (3) Neogen Powder (trade name) | 11.43 parts by weight |
| (4) Mirabilite | 0.59 parts by weight |

Above components were mixed uniformly and water was added to the mixture to knead further. The mixture was subjected to extruding granulation. After drying and grading, water dispersible granules was obtained.

The preparation obtained is applied by diluting with water containing an ethoxylated fatty amine type surfactant, a vegetable oil and/or a mineral oil and other surfactant.

Examples of the method for herbicidal activity-enhancing of herbicidal oil-based suspension containing the certain sulfonylurea type herbicidal active ingredient are as follows:

### EXAMPLE 8

| | |
|---|---|
| (1) Compound A (purity 93.8%) | 4.91 parts by weight |
| (2) A mixture of polyoxyethylene nonylphenyl ether, dialkylsulfosuccinate, polyoxyethylene hydrogenated castor oil and polyglycerol esters of fatty acid (trade name: Sorpol 3815K; produced by Toho Chemical Industry) | 12.55 parts by weight |
| (3) Bentonite-alkylamino complex (trade name: New D Orben; Produced by Shiraishi Kogyo) | 2.09 parts by weight |
| (4) Corn oil | 80.45 parts by weight |

The above components were mixed, and the mixture was subjected to wet-grinding for 15 minutes using a wet-grinding machine Dyno-Mill type KDL (manufactured by Willy A. Bachofen Inc.). The wet-grinding machine was loaded at loading rate of 60% with glass beads having diameter of 1 mm and rotated at a peripheral speed of 10.5 m/sec, and an oil-based suspension concentrate was obtained.

The preparation obtained is applied by diluting with water containing an ethoxylated fatty amine type surfactant.

### EXAMPLE 9

| | |
|---|---|
| (1) Compound A (purity 93.8%) | 4.91 parts by weight |
| (2) Sorpol 3815K (trade name) | 12.55 parts by weight |
| (3) New D Orben (trade name) | 2.09 parts by weight |
| (4) Urea | 1.05 parts by weight |
| (5) Corn oil | 79.40 parts by weight |

The above components were mixed, and the mixture was subjected to wet-grinding for 15 minutes, using the same wet-grinding machine under the same conditions as in Example 8, and an oil-based suspension concentrate was obtained.

The preparation obtained is applied by diluting with water containing an ethoxylated fatty amine type surfactant.

### EXAMPLE 10

| | |
|---|---|
| (1) Compound A (purity 93.8%) | 2.79 parts by weight |
| (2) Octanoic acid ester of 3,5-dibromo-4-hydroxybenzonitrile (purity 94.6%) | 25.38 parts by weight |
| (3) A mixture of glycerine fatty acid ester and polyoxyethylene alkylaryl ether (trade name: Geronol VO/278; produced by Rhone-Poulenc) | 9.44 parts by weight |
| (4) Fine amorphous silica (trade name: Aerosil R974; produced by Degussa) | 1.51 parts by weight |
| (5) Urea | 0.94 parts by weight |
| (6) Aromatic solvent with a high boiling point (trade name: Solvesso 200; produced by Exxon Chemical) | 18.87 parts by weight |
| (7) Corn oil | 41.07 parts by weight |

The above components were mixed, and the mixture was subjected to wet-grinding for 15 minutes, using the same wet-grinding machine under the same conditions as in Example 8, and an oil-based suspension concentrate was obtained.

The preparation obtained is applied by diluting with water containing an ethoxylated fatty amine type surfactant.

### EXAMPLE 11

An oil-based suspension concentrate was obtained by the same manner with Example 10, excepting aromatic solvent with a high boiling point (trade name: Hisol SAS-296; produced by Nippon Petrochemicals) was used in place of Solvesso 200 (trade name).

The preparation obtained is applied by diluting with water containing an ethoxylated fatty amine type surfactant.

### EXAMPLE 12

| | |
|---|---|
| (1) Compound A (purity 93.8%) | 2.79 parts by weight |
| (2) Octanoic acid ester of 3,5-dibromo-4-hydroxybenzonitrile (purity 94.6%) | 25.38 parts by weight |
| (3) Geronol VO/278 (trade name) | 11.32 parts by weight |
| (4) Bentonite-alkylamino complex (trade name: Bentone SD-1; produced by Rheox) | 2.36 parts by weight |
| (5) Urea | 0.94 parts by weight |
| (6) Hisol SAS-296 (trade name) | 18.87 parts by weight |
| (7) Corn Oil | 38.34 parts by weight |

The above components were mixed, and the mixture was subjected to wet-grinding for 15 minutes, using the same wet-grinding machine under the same conditions as in Example 8, and an oil-based suspension concentrate was obtained.

The preparation obtained is applied by diluting with water containing an ethoxylated fatty amine type surfactant.

### EXAMPLE 13

| | |
|---|---|
| (1) Compound A (purity 93.8%) | 4.69 parts by weight |
| (2) Ethyl 2,4-dichlorophenoxyacetate (purity 97.8%) | 21.47 parts by weight |
| (3) Geronol VO/278 (trade name) | 10.00 parts by weight |
| (4) Aerosil R974 (trade name) | 1.00 part by weight |
| (5) Urea | 1.00 part by weight |
| (6) Corn oil | 61.84 parts by weight |

The above components were mixed, and the mixture was subjected to wet-grinding for 15 minutes, using the same wet-grinding machine under the same conditions as in Example 8, and an oil-based suspension concentrate was obtained.

The preparation obtained is applied by diluting with water containing an ethoxylated fatty amine type surfactant.

### EXAMPLE 14

| | |
|---|---|
| (1) Compound A (purity 93.8%) | 4.91 parts by weight |
| (2) Sorpol 3815K (trade name) | 12.55 parts by weight |
| (3) Rapeseed oil | 82.54 parts by weight |

The above components are mixed, and the mixture is subjected to wet-grinding for 15 minutes, using the same wet-grinding machine under the same conditions as in Example 8, and an oil-based suspension concentrate is obtained.

The preparation obtained is applied by diluting with water containing an ethoxylated fatty amine type surfactant.

### EXAMPLE 15

| | |
|---|---|
| (1) Compound B (purity 97.0%) | 5.66 parts by weight |
| (2) Sorpol 3815K (trade name) | 12.55 parts by weight |
| (3) New D Orben (trade name) | 2.09 parts by weight |
| (4) Corn oil | 79.70 parts by weight |

The above components are mixed, and the mixture is subjected to wet-grinding for 15 minutes, using the same wet-grinding machine under the same conditions as in Example 8, and an oil-based suspension concentrate is obtained.

The preparation obtained is applied by diluting with water containing an ethoxylated fatty amine type surfactant.

### EXAMPLE 16

| | |
|---|---|
| (1) Compound B (purity 97.0%) | 5.10 parts by weight |
| (2) Octanoic acid ester of 3,5-dibromo-4-hydroxybenzonitrile (purity 94.6%) | 25.38 parts by weight |
| (3) Geronol VO/278 (trade name) | 11.32 parts by weight |
| (4) Aerosil R974 (trade name) | 1.42 parts by weight |
| (5) Urea | 0.94 parts by weight |
| (6) Hisol SAS-296 (trade name) | 18.87 parts by weight |
| (7) Sunflower oil | 36.97 parts by weight |

The above components are mixed, and the mixture is subjected to wet-grinding for 15 minutes, using the same wet-grinding machine under the same conditions as in Example 8, and an oil-based suspension concentrate is obtained.

The preparation obtained is applied by diluting with water containing an ethoxylated fatty amine type surfactant.

### EXAMPLE 17

| | |
|---|---|
| (1) Compound B (purity 97.0%) | 5.41 parts by weight |
| (2) Ethyl 2,4-dichorophenoxy- | 21.47 parts by weight |
| acetate (purity 97.8%) (3) Sorpol 3815K (trade name) | 12.00 parts by weight |
| (4) Bentone SD-1 (trade name) | 2.00 parts by weight |
| (5) Corn oil | 59.12 parts by weight |

The above components are mixed, and the mixture is subjected to wet-grinding for 15 minutes, using the same wet-grinding machine under the same conditions as in Example 8, and an oil-based suspension concentrate is obtained.

The preparation obtained is applied by diluting with water containing an ethoxylated fatty amine type surfactant.

Examples of the method for activity-enhancing of herbicidal gel composition containing the certain sulfonylurea type herbicidal active ingredient are as follows:

### EXAMPLE 18

[1]

| | |
|---|---|
| (1) Compound A (purity 93.8%) | 4.91 parts by weight |
| (2) Sorpol 3815K (trade name) | 12.55 parts by weight |
| (3) New D Orben (trade name) | 2.09 parts by weight |
| (4) Corn oil | 80.45 parts by weight |

The above components were mixed, and the mixture was subjected to wet-grinding for 15 minutes, using the same wet-grinding machine under the same conditions as in Example 8, and composition (A) was obtained.
[2]

| | |
|---|---|
| (1) A mixture of sodium dioctylsulfosuccinate and sodium benzoate (trade name: New Kalgen EX-70; produced by Takemoto Oils and Fats) | 50.0 parts by weight |
| (2) Corn oil | 50.0 parts by weight |

The above components were mixed for 30 minutes at 180°C and subsequently the mixture was cooled to obtain composition (B).
[3]

| | |
|---|---|
| (1) Composition (A) | 60.0 parts by weight |
| (2) Composition (B) | 40.0 parts by weight |

The compositions (A) and (B) were mixed for 5 minutes at 80°C and subsequently the mixture was cooled to obtain gel formulation.
The preparation obtained is applied by diluting with water containing an ethoxylated fatty amine type surfactant.

### EXAMPLE 19

[1]

| | |
|---|---|
| (1) Compound A (purity 93.9%) | 4.22 parts by weight |
| (2) Octanoic acid ester of 3,5-dibromo-4-hydroxybenzonitrile (purity 94.6%) | 26.18 parts by weight |
| (3) Sorpol 3815K (trade name) | 11.32 parts by weight |
| (4) New D Orben (trade name) | 1.89 parts by weight |
| (5) Corn oil | 56.39 parts by weight |

The above components were mixed, and the mixture was subjected to wet-grinding for 15 minutes, using the same wet-grinding machine under the same conditions as in Example 8, and composition (C) was obtained.
[2]

| | |
|---|---|
| (1) Composition (C) | 60.0 parts by weight |
| (2) Composition (B) obtained in Example 18 [2] | 40.0 parts by weight |

The compositions (C) and (B) were mixed for 5 minutes at 80°C and subsequently the mixture was cooled to obtain gel formulation.
The preparation obtained is applied by diluting with water containing an ethoxylated fatty amine type surfactant.

### EXAMPLE 20

| | |
|---|---|
| (1) Composition (C) obtained in Example 19 [1] | 90.0 parts by weight |
| (2) 12-Hydroxy stearic acid | 10.0 parts by weight |

The above components were mixed for 5 minutes at 50°C and subsequently the mixture was cooled to obtain gel formulation.

The preparation obtained is applied by diluting with water containing an ethoxylated fatty amine type surfactant.

### EXAMPLE 21

[1]

| | |
|---|---|
| (1) Compound A (purity 93.8%) | 4.91 parts by weight |
| (2) Sorpol 3815K (trade name) | 12.55 parts by weight |
| (3) Corn oil | 82.54 parts by weight |

The above components are mixed, and the mixture is subjected to wet-grinding for 15 minutes, using the same wet-grinding machine under the same conditions as in Example 8, and composition (D) is obtained.
[2]

| | |
|---|---|
| (1) Composition (D) | 60.0 parts by weight |
| (2) Composition (B) obtained in Example 18 [2] | 40.0 parts by weight |

The compositions (D) and (B) are mixed for 5 minutes at 80°C and subsequently the mixture is cooled to obtain gel formulation.
The preparation obtained is applied by diluting with water containing an ethoxylated fatty amine type surfactant.

### EXAMPLE 22

[1]

| | |
|---|---|
| (1) Compound B (purity 97.0%) | 5.66 parts by weight |
| (2) Sorpol 3815K (trade name) | 12.55 parts by weight |
| (3) New D Orben (trade name) | 2.09 parts by weight |
| (4) Corn oil | 79.70 parts by weight |

The above components are mixed, and the mixture is subjected to wet-grinding for 15 minutes, using the same wet-grinding machine under the same conditions as in Example 8, and composition (E) is obtained.
[2]

| | |
|---|---|
| (1) Composition (E) | 60.0 parts by weight |
| (2) Composition (B) obtained in Example 18 [2] | 40.0 parts by weight |

The compositions (E) and (B) are mixed for 5 minutes at 80°C and subsequently the mixture is cooled to obtain gel formulation.
The preparation obtained is applied by diluting with water containing an ethoxylated fatty amine type surfactant.
Examples of preparations of the activity-enhanced herbicidal composition are as follows:

### EXAMPLE 23

| | |
|---|---|
| (1) Compound A (purity 93.8%) | 4.91 parts by weight |
| (2) Sorpol 3815K (trade name) | 12.55 parts by weight |
| (3) New D Orben (trade name) | 2.09 parts by weight |
| (4) Tallow amine ethoxylate (trade name: Frigate; produced by ISK Biotech) | 41.84 parts by weight |
| (5) Corn oil | 38.61 parts by weight |

The above components are mixed, and the mixture is subjected to wet-grinding for 15 minutes, using the same wet-grinding machine under the same conditions as in Example 8, and an activity-enhanced oil-based suspension concentrate is obtained.

### EXAMPLE 24

| | |
|---|---|
| (1) Compound A (purity 93.8%) | 4.91 parts by weight |
| (2) Sorpol 3815K (trade name) | 12.55 parts by weight |
| (3) New D Orben (trade name) | 2.09 parts by weight |
| (4) Soy amine ethoxylate (trade name: Sorpol 7721; produced by Toho Chemical Industry) | 41.84 parts by weight |
| (5) Corn oil | 38.61 parts by weight |

The above components are mixed, and the mixture is subjected to wet-grinding for 15 minutes, using the same wet-grinding machine under the same conditions as in Example 8, and an activity-enhanced oil-based suspension concentrate is obtained.

### EXAMPLE 25

| | |
|---|---|
| (1) Compound A (purity 93.8%) | 4.91 parts by weight |
| (2) Sorpol 3815K (trade name) | 12.55 parts by weight |
| (3) New D Orben (trade name) | 2.09 parts by weight |
| (4) Urea | 1.05 parts by weight |
| (5) Frigate (trade name) | 41.84 parts by weight |
| (6) Corn oil | 37.56 parts by weight |

The above components are mixed, and the mixture is subjected to wet-grinding for 15 minutes, using the same wet-grinding machine under the same conditions as in Example 8, and an activity-enhanced oil-based suspension concentrate is obtained.

### EXAMPLE 26

| | |
|---|---|
| (1) Compound A (purity 93.8%) | 4.91 parts by weight |
| (2) Sorpol 3815K (trade name) | 12.55 parts by weight |
| (3) New D Orben (trade name) | 2.09 parts by weight |
| (4) Urea | 1.05 parts by weight |
| (5) Coco amine ethoxylate (trade name: Sorpol 7376; produced by Toho Chemical Industry) | 41.84 parts by weight |
| (6) Corn oil | 37.56 parts by weight |

The above components are mixed, and the mixture is subjected to wet-grinding for 15 minutes, using the same wet-grinding machine under the same conditions as in Example 8, and an activity-enhanced oil-based suspension concentrate is obtained.

### EXAMPLE 27

| | |
|---|---|
| (1) Compound A (purity 93.8%) | 2.79 parts by weight |
| (2) Octanoic acid ester of 3,5-dibromo-4-hydroxybenzonitrile (purity 94.6%) | 25.38 parts by weight |
| (3) Geronol VO/278 (trade name) | 11.32 parts by weight |
| (4) Bentone SD-1 (trade name) | 2.36 parts by weight |
| (5) Urea | 0.94 parts by weight |
| (6) Hisol SAS-296 (trade name) | 18.87 parts by weight |
| (7) Frigate (trade name) | 18.87 parts by weight |
| (8) Corn oil | 19.47 parts by weight |

The above components are mixed, and the mixture is subjected to wet-grinding for 15 minutes, using the same wet-grinding machine under the same conditions as in Example 8, and an activity-enhanced oil-based suspension concentrate is obtained.

### EXAMPLE 28

An activity-enhanced oil-based suspension concentrate is obtained by the same manner with Example 27, excepting tallow amine ethoxylate (trade name: Sorpol 7409; produced by Toho Chemical Industry) is used in place of Frigate (trade name).

### EXAMPLE 29

| | |
|---|---|
| (1) Compound A (purity 93.8%) | 4.69 parts by weight |
| (2) Ethyl 2,4-dichlorophenoxyacetate (purity 97.8%) | 21.47 parts by weight |
| (3) Geronol VO/278 (trade name) | 10.00 parts by weight |
| (4) Aerosil R974 (trade name) | 1.00 part by weight |
| (5) Urea | 1.00 part by weight |
| (6) Frigate (trade name) | 30.00 parts by weight |
| (7) Corn oil | 31.84 parts by weight |

The above components are mixed, and the mixture is subjected to wet-grinding for 15 minutes, using the same wet-grinding machine under the same conditions as in Example 8, and an activity-enhanced oil-based suspension concentrate is obtained.

### EXAMPLE 30

| | |
|---|---|
| (1) Compound B (purity 97.0%) | 5.66 parts by weight |
| (2) Sorpol 3815K (trade name) | 12.55 parts by weight |
| (3) New D Orben (trade name) | 2.09 parts by weight |
| (4) Frigate (trade name) | 31.38 parts by weight |
| (5) Corn oil | 48.32 parts by weight |

The above components are mixed, and the mixture is subjected to wet-grinding for 15 minutes, using the same wet-grinding machine under the same conditions as in Example 8, and an oil-based suspension concentrate is obtained.

### EXAMPLE 31

| | |
|---|---|
| (1) Composition (A) obtained in Example 18 [1] | 29.6 parts by weight |
| (2) Composition (B) obtained in Example 18 [2] | 60.0 parts by weight |
| (3) Oily product obtained by heating Frigate (trade name) under reduced pressure | 10.4 parts by weight |

The above components were mixed for 5 minutes at 80°C and subsequently the mixture was cooled to obtain activity-enhanced gel formulation.

### EXAMPLE 32

| | |
|---|---|
| (1) Composition (C) obtained in Example 19 [1] | 29.6 parts by weight |
| (2) Composition (B) obtained in Example 18 [2] | 60.0 parts by weight |
| (3) Oily product obtained by heating Frigate (trade name) under reduced pressure | 10.4 parts by weight |

The above components were mixed for 5 minutes at 80°C and subsequently the mixture was cooled to obtain activity-enhanced gel formulation.

Examples of the preparations of the activity-enhancing composition are as follows:

### EXAMPLE 33

| | |
|---|---|
| (1) Frigate (trade name) | 86.0 parts by weight |
| (2) Corn oil | 14.0 parts by weight |

The above components were mixed to obtain activity-enhancing composition.

### EXAMPLE 34

| | |
|---|---|
| (1) Frigate (trade name) | 17.6 parts by weight |
| (2) Corn oil | 70.4 parts by weight |
| (3) Sorpol 3815K (trade name) | 12.0 parts by weight |

The above components were mixed to obtain activity-enhancing composition.

### EXAMPLE 35

| | |
|---|---|
| (1) Frigate (trade name) | 64.0 parts by weight |
| (2) Corn oil | 32.0 parts by weight |
| (3) Geronol VO/278 (trade name) | 4.0 parts by weight |

The above components were mixed to obtain activity-enhancing composition.

### EXAMPLE 36

| | |
|---|---|
| (1) Frigate (trade name) | 60.8 parts by weight |
| (2) Corn oil | 15.2 parts by weight |
| (3) Sorpol 3815K (trade name) | 4.0 parts by weight |
| (4) N-methylpyrrolidone | 20.0 parts by weight |

The above components were mixed to obtain activity-enhancing composition.

### EXAMPLE 37

| | |
|---|---|
| (1) Frigate (trade name) | 14.0 parts by weight |
| (2) Corn oil | 56.0 parts by weight |
| (3) Geronol VO/278 (trade name) | 10.0 parts by weight |
| (4) Hisol SAS-296 (trade name) | 20.0 parts by weight |

The above components were mixed to obtain activity-enhancing composition.

### EXAMPLE 38

| | |
|---|---|
| (1) Tallow amine ethoxylate (trade | 46.0 parts by weight |
| name: Ethylan TT-15) | |
| (2) Corn oil | 46.0 parts by weight |
| (3) Sorpol 3815K (trade name) | 8.0 parts by weight |

The above components are mixed to obtain activity-enhancing composition.

### EXAMPLE 39

| | |
|---|---|
| (1) Sorpol 7409 (trade name) | 36.0 parts by weight |
| (2) Corn oil | 54.0 parts by weight |
| (3) Geronol VO/278 (trade name) | 10.0 parts by weight |

The above components were mixed to obtain activity-enhancing composition.

### EXAMPLE 40

| | |
|---|---|
| (1) Coco amine ethoxylate (trade | 17.6 parts by weight |
| name: New Kalgen D-3110) | |
| (2) Corn oil | 70.4 parts by weight |
| (3) Sorpol 3815K (trade name) | 12.0 parts by weight |

The above components were mixed to obtain activity-enhancing composition.

### EXAMPLE 41

| | |
|---|---|
| (1) Sorpol 7721 (trade name) | 64.0 parts by weight |
| (2) Corn oil | 32.0 parts by weight |
| (3) Geronol VO/ 278 (trade name) | 4.0 parts by weight |

The above components were mixed to obtain activity-enhancing composition.

### EXAMPLE 42

| | |
|---|---|
| (1) Frigate (trade name) | 17.6 parts by weight |
| (2) Rapeseed oil | 70.4 parts by weight |
| (3) Sorpol 3815K (trade name) | 12.0 parts by weight |

The above components were mixed to obtain activity-enhancing composition.

### EXAMPLE 43

| | |
|---|---|
| (1) Frigate (trade name) | 86.0 parts by weight |
| (2) Liquid paraffin (produced by Nacalai Tesque) | 14.0 parts by weight |

The above components were mixed to obtain activity-enhancing composition.

### EXAMPLE 44

| | |
|---|---|
| (1) Frigate (trade name) | 50.0 parts by weight |
| (2) A spray additive containing methylated seed oil as an active ingredient (trade name: Scoil; produced by Agsco) | 50.0 parts by weight |

The above components were mixed to obtain activity-enhancing composition.

### EXAMPLE 45

| | |
|---|---|
| (1) Frigate (trade name) | 20.0 parts by weight |
| (2) A mixture of paraffin petroleum and surfactant(s) (trade name: Rigo Oil Concentrate; produced by Rigo) | 40.0 parts by weight |
| (3) Geronol VO/278 (trade name) | 20.0 parts by weight |
| (4) Hisol SAS-296 (trade name) | 20.0 parts by weight |

The above components were mixed to obtain activity-enhancing composition.

### EXAMPLE 46

| | |
|---|---|
| (1) Frigate (trade name) | 36.0 parts by weight |
| (2) Methyl oleate (trade name: ADJ-100; produced by Takemoto Oils and Fats) | 36.0 parts by weight |
| (3) Sorpol 3815K (trade name) | 18.0 parts by weight |
| (4) Hisol SAS-296 (trade name) | 10.0 parts by weight |

The above components were mixed to obtain activity-enhancing composition.

### EXAMPLE 47

| | |
|---|---|
| (1) Frigate (trade name) | 64.0 parts by weight |
| (2) Sunflower oil | 30.0 parts by weight |
| (3) Geronol VO/278 (trade name) | 6.0 parts by weight |

The above components are mixed to obtain activity-enhancing composition.

Test examples of the present invention will be cited below.

### TEST EXAMPLE 1

Crabgrass (Digitaria sanguinalis L.) seeds were sown in 1/1,000,000-hectare pots filled with upland soil. When the crabgrass plants grew to a 3.5- to 3.8-leaf stage, the water dispersible granules containing, as a herbicidal active ingredient, compound A (trade name: Accent; produced by DuPont) was diluted with 200 liters/hectare of water containing a predetermined amount of Frigate (trade name) and a predetermined amount of corn oil which was previously prepared by mixing with a predetermined amount of Sorpol 3815K (trade name) and was applied foliarly to the plants with a small spray gun.

In the test, Accent was used in an amount of 10 g/hectare based on compound A and the corn oil was used as a mixture of 12 parts by weight of Sorpol 3815K and 88 parts by weight of corn oil.

Twenty six days after treatment, the growth inhibition of the plants was evaluated with visual observation. The results of the evaluation were rated by the percentage scale [0% for no growth inhibition to 100% for complete growth inhibition] and are shown in Table 1.

As a comparison purpose, the growth inhibitions of the case mixing Accent with Frigate and the case mixing Accent with the corn oil previously mixed with Sorpol 3815K were also shown in Table 1. (The growth inhibition of the case that Accent alone is applied is 0%.)

**TABLE 1**

| Amount of Frigatge and Corn Oil Added (% by volume based on water) | | Growth Inhibition (%) of Crabgrass |
|---|---|---|
| Frigate | 0.1 | 35 |
| Corn oil (+ Sorpol 3815K) | 0.3 | 60 |
| | 0.2 | 45 |
| | 0.1 | 20 |
| | 0.05 | 10 |
| | 0.025 | 0 |
| Frigate + Corn Oil (+ Sorpol 3815K) | 0.1+0.3 | 95 |
| | 0.1+0.2 | 90 |
| | 0.1+0.1 | 95 |
| | 0.1+0.05 | 95 |
| | 0.1+0.025 | 98 |

As shown in Table 1, the enhancing effect of herbicidal activity obtained by the combination of Frigate and corn oil is not an additive effect of each enhancing effect which is possessed independently but a remarkably synergistic effect.

### TEST EXAMPLE 2

Crabgrass (Digitaria sanguinalis L.) seeds were sown in 1/1,000,000-hectare pots filled with upland soil. When the crabgrass plants grew to a 2.5- to 3.0-leaf stage, Accent (water dispersible granules) was diluted with 200 liters/hectare of water containing a predetermined amount of Frigate and a predetermined amount of corn oil which was previously prepared by mixing with a predetermined amount of Sorpol 3815K and was applied foliarly to the plants with a small spray gun.

In the test, Accent was used in an amount of 5 g/hectare based on compound A and the same corn oil as in Test Example 1 was used.

Twenty days after treatment, the growth inhibition of the plants was evaluated with visual observation in the same manner as in Test Example 1 and are shown in Table 2.

As a comparison purpose, the growth inhibitions of the case mixing Accent with Frigate and the case mixing Accent with the corn oil previously mixed with Sorpol 3815K were also shown in Table 2. (The growth inhibition of the case that Accent alone is applied is 0%.)

**TABLE 2**

| Amount of Corn Oil Added volume based | Frigate and (% by on water) | Growth Inhibition (%) of Crabgrass |
|---|---|---|
| Frigate | 0.2 | 60 |
| | 0.1 | 30 |
| | 0.05 | - |
| Corn oil (+ Sorpol 3815K) | 0.4 | 60 |
| | 0.2 | 35 |
| | 0.1 | 15 |
| | 0.05 | - |
| Frigate + Corn oil (+ Sorpol 3815K) | 0.2+0.1 | 75 |
| | 0.2+0.05 | 70 |
| | 0.1+0.4 | 85 |
| | 0.1+0.2 | 80 |
| | 0.1+0.1 | 75 |
| | 0.1+0.05 | 65 |
| | 0.05+0.4 | 80 |
| | 0.05+0.2 | 75 |
| | 0.05+0.1 | 70 |
| | 0.05+0.05 | 60 |

As shown in Table 2, the enhancing effect of herbicidal activity obtained by the combination of Frigate and corn oil is not an additive effect of each enhancing effect which is possessed independently but a remarkably synergistic effect.

### TEST EXAMPLE 3

Crabgrass (Digitaria sanguinalis L.) seeds were sown in 1/1,000,000-hectare pots filled with upland soil. When the crabgrass plants grew to a 3.2-leaf stage, Accent (water dispersible granules) was diluted with 200 liters/hectare of water containing 0.5% by volume of the activity-enhancing composition of the present invention obtained in the examples described hereinbefore and was applied foliarly to the plants with a small spray gun.

In the test, Accent was used in an amount of 5 g/hectare and 10 g/hectare based on compound A, respectively.

Nineteen days after treatment, the growth inhibition of the plants was evaluated with visual observation in the same manner as in Test Example 1 and are shown in Table 3.

**TABLE 3**

| Activity-Enhancing Composition Used (Example No.) | Amount of Compound A (g/ha) | Growth Inhibition (%) of Crabgrass |
|---|---|---|
| 33 | 10 | 90 |
| | 5 | 85 |
| 34 | 10 | 90 |
| | 5 | 85 |
| 35 | 10 | 90 |
| | 5 | 85 |
| 36 | 10 | 90 |
| | 5 | 85 |
| 37 | 10 | 90 |
| | 5 | 80 |
| 39 | 10 | 90 |
| | 5 | 85 |
| 40 | 10 | 90 |
| | 5 | 80 |
| 41 | 10 | 90 |
| | 5 | 85 |
| 42 | 10 | 90 |
| | 5 | 85 |
| 43 | 10 | 95 |
| | 5 | 70 |

As shown in Table 3, the enhancing effect of herbicidal activity obtained by mixing the activity-enhancing composition of the present invention is remarkable.

### TEST EXAMPLE 4

Crabgrass (Digitaria sanguinalis L.) seeds were sown in 1/1,000,000-hectare pots filled with upland soil. When the crabgrass plants grew to a 2.5- to 3.3-leaf stage, Accent (water dispersible granules) was diluted with 200 liters/hectare of water containing a predetermined amount of Frigate and a predetermined amount of a vegetable oil or a mineral oil and was applied foliarly to the plants with a small spray gun.

In the test, Accent was used in an amount of 10 g/hectare based on compound A and as the vegetable oil or a mineral oil, the same corn oil as used in Test Example 1, a spray additive containing methylated seed oil as an active ingredient (trade name: Scoil; produced by Agsco) and a mixture of paraffin petroleum and surfactant(s) (trade name: Rigo Oil Concentrate; produced by Rigo) were used.

Twenty four days after treatment, the growth inhibition of the plants was evaluated with visual observation in the same manner as in Test Example 1 and are shown in Table 4.

As a comparison purpose, the growth inhibitions of the case mixing Accent with Frigate and the case mixing Accent with the vegetable oil or a mineral oil were also shown in Table 4. (The growth inhibition of the case that Accent alone is applied is 0%.)

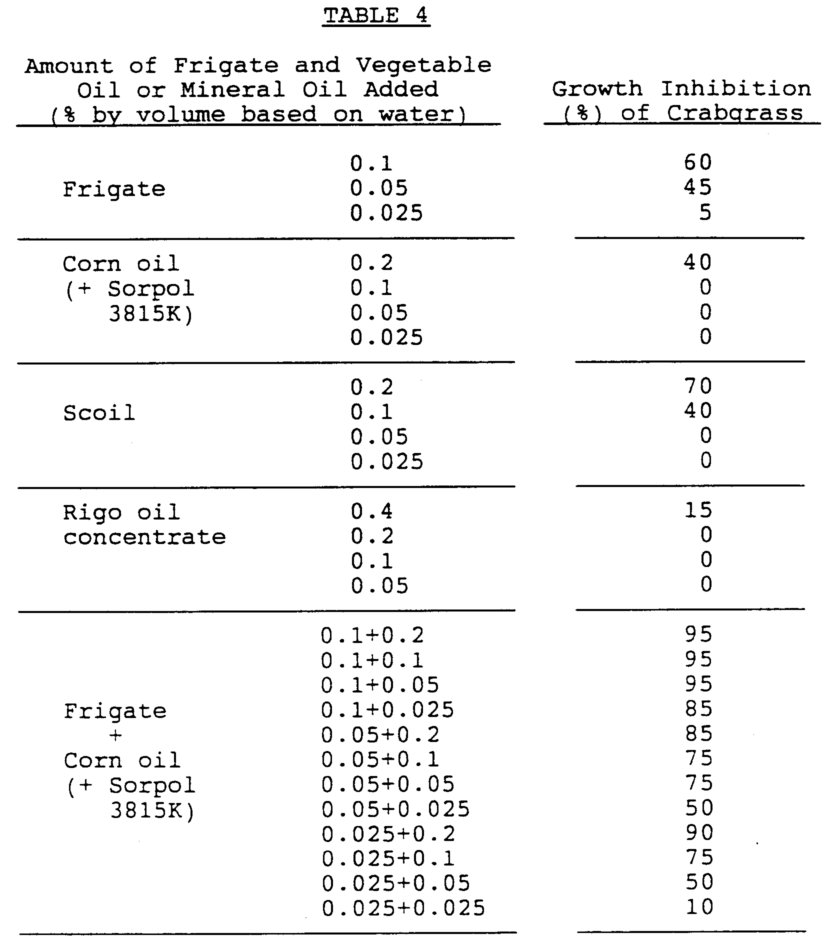

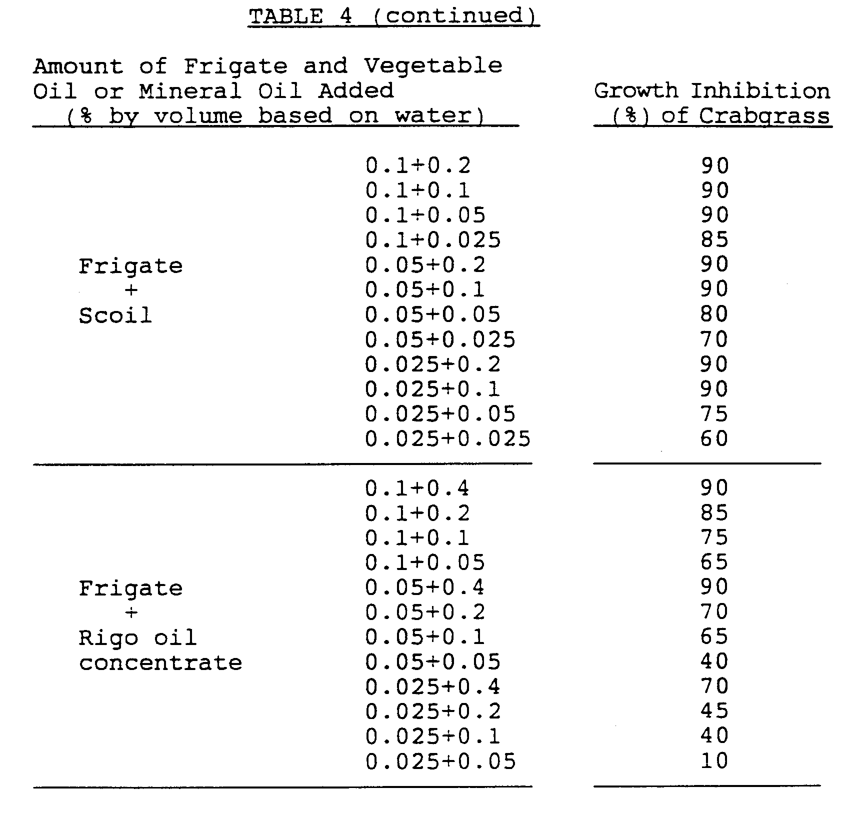

As shown in Table 4, the enhancing effect of herbicidal activity obtained by the combination of Frigate and vegetable oil or mineral oil is not an additive effect of each enhancing effect which is possessed independently but a remarkably synergistic effect.

### TEST EXAMPLE 5

Crabgrass (Digitaria sanguinalis L.) seeds were sown in 1/1,000,000-hectare pots filled with upland soil and arranged in a duplicate system. When the crabgrass plants grew to a 3.5- to 4.0-leaf stage, water dispersible granules obtained in Example 7 described hereinbefore was diluted with 200 liters/hectare of water containing 0.2% by volume of Frigate and 0.4% by volume of a vegetable oil which was previously prepared by mixing with a predetermined amount of Geronol VO/278 (trade name) and was applied foliarly to the plants with a small spray gun.

Twenty three days after treatment, the growth inhibition of the plants was evaluated with visual observation in the same manner as in Test Example 1 and are shown in Table 5.

In the test, a vegetable oil, a fatty acid originated therefrom and an alkylester of the fatty acid were used as the vegetable oil and which are each of mixture of 10 parts by weight of Geronol VO/278 and 90 parts by weight of the following vegetable oil, fatty acids originated from vegetable oils and alkylesters of fatty acids.
(a) corn oil
(b) fatty acid originated from corn oil (prepared by hydrolysis of corn oil)
(c) methylester of (b)
(d) methylester of fatty acid originated from cottonseed oil
(e) methylester of fatty acid originated from rapeseed oil
(f) methyl oleate (trade name: ADJ-100)
(g) butyl oleate (trial product No. 93091; produced by Takemoto Oils and Fats)

**TABLE 5**

| Kinds of Vegetable Oil | Growth Inhibition (%) of Crabgrass | | | |
|---|---|---|---|---|
| | Amount of Compound A (g/ha) | | | |
| | 5 | | 2.5 | |
| a | 85 | 75 | 65 | 65 |
| b | 90 | 85 | 65 | 65 |
| c | 98 | 75 | 75 | 75 |
| d | 90 | 90 | 90 | 70 |
| e | 90 | 90 | 85 | 65 |
| f | 90 | 90 | 60 | 60 |
| g | 95 | 80 | 70 | 70 |

As shown in Table 5, the enhancing effects of herbicidal activity obtained by using the vegetable oil, the fatty acids originated from vegetable oils and the alkylesters of fatty acids are remarkable.

### TEST EXAMPLE 6

Velvetleaf (Abutilon theophrasti MEDIC.) seeds were sown in 1/1,000,000-hectare pots filled with upland solid. When the velvetleaf plants grew to a 2.5-leaf stage, the water dispersible granules containing, as a herbicidal active ingredient, compound B (trade name; Tell; produced by Ciba-Geigy) was diluted with 200 liters/hectare of water containing a predetermined amount of Frigate and a predetermined amount of corn oil which was previously prepared by mixing with a predetermined amount of Sorpol 3815K and was applied foliarly to the plants with a small spray gun.

In the test, Tell was used in an amount of 2.5 g/hectare and 5 g/hectare based on compound B and the same corn oil as in Test Example 1 was used.

Eighteen days after treatment, the growth inhibition of the plants was evaluated with visual observation in the same manner as in Test Example 1 and are shown in Table 6.

As a comparison purpose, the growth inhibitions of the case mixing Tell with Frigate and the case mixing Tell with the corn oil previously mixed with Sorpol 3815K were also shown in Table 6.

**TABLE 6**

| Amount of Frigate and Corn Oil Added (% by volume based on water) | | Amount of Compound B (g/ha) | Growth Inhibition (%) of Velvetleaf |
|---|---|---|---|
| Frigate | 0.2 | 5 | 40 |
| | | 2.5 | 20 |
| Corn oil (+ Sorpol 3815K) | 0.4 | 5 | 75 |
| | | 2.5 | 20 |
| | 0.2 | 5 | 40 |
| | | 2.5 | 20 |
| Frigate + Corn oil (+ Sorpol 3815K) | 0.2+0.4 | 5 | 95 |
| | | 2.5 | 70 |
| | 0.2+0.2 | 5 | 80 |
| | | 2.5 | 60 |

As shown in Table 6, the enhancing effect of herbicidal activity obtained by the combination of Frigate and corn oil is not an additive effect of each enhancing effect which is possessed independently but a remarkably synergistic effect.

### TEST EXAMPLE 7

Crabgrass (Digitaria sanguinalis L.) seeds were sown in 1/1,000,000-hectare pots filled with upland soil and arranged in a duplicate system. When the crabgrass plants grew to a 3- to 3.3-leaf stage, the oil-based suspension concentrate obtained in Example 8 was diluted with 500 liters/hectare of water containing a predetermined amount of Frigate and was applied foliarly to the plants with a small spray gun.

Twenty days after treatment, the growth inhibition of plants was evaluated with visual observation in the same manner as in Teat Example 1 and are shown in Table 7.

**TABLE 7**

| Amount of Frigate Added (% by volume based on water) | Amount of Compound A (g/ha) | Growth Inhibition (%) of Crabgrass | |
|---|---|---|---|
| No addition | 40 | 85 | 95 |
| | 20 | 70 | 80 |
| | 10 | 5 | 0 |
| | 5 | 0 | 0 |
| 0.125 | 40 | 100 | 98 |
| | 20 | 90 | 95 |
| | 10 | 85 | 95 |
| | 5 | 40 | 45 |
| 0.25 | 40 | 100 | 100 |
| | 20 | 100 | 90 |
| | 10 | 95 | 90 |
| | 5 | 50 | 50 |
| 0.5 | 40 | 98 | 98 |
| | 20 | 100 | 98 |
| | 10 | 95 | 85 |
| | 5 | 75 | 85 |

### TEST EXAMPLE 8

Common lambsquarters (Chenopodium album L.) seeds were sown in 1/1,000,000-hectare pots filled with upland soil and arranged in a duplicate system. When the common lambsquarters plants grew to a 8- to 9-leaf stage, the oil-based suspension concentrate obtained in Example 8 was diluted with 500 liters/hectare of water containing a predetermined amount of Frigate and was applied foliarly to the plants with a small spray gun.

Seventeen days after treatment, the growth inhibition of plants was evaluated with visual observation in the same manner as in Test Example 1 and are shown in Table 8.

**TABLE 8**

| Amount of Frigate Added (% by volume based on water) | Amount of Compound A (g/ha) | Growth Inhibition (%) of Common Lambsquarters | |
|---|---|---|---|
| No addition | 40 | 80 | 70 |
| | 20 | 50 | 50 |
| | 10 | 0 | 0 |
| | 5 | 0 | 0 |
| 0.25 | 40 | 90 | 90 |
| | 20 | 80 | 80 |
| | 10 | 60 | 65 |
| | 5 | 50 | 55 |
| 0.5 | 40 | 90 | 90 |
| | 20 | 85 | 85 |
| | 10 | 70 | 70 |
| | 5 | 55 | 60 |

### TEST EXAMPLE 9

Velvetleaf (Abutilon theophrasti MEDIC.) and common cocklebur (Xanthium strumarium L.) seeds were sown in 1/1,000,000-hectare pots filled with upland soil and arranged in a duplicate system. When the velvetleaf plants and common cocklebur plants grew to a 2.1- and 2.3-leaf stage, respectively, the oil-based suspension concentrate obtained in Example 8 was diluted with 500 liters/hectare of water containing a predetermined amount of Frigate and was applied foliarly to the plants with a small spray gun.

Twenty two days after treatment, the growth inhibition of plants was evaluated with visual observation in the same manner as in Test Example 1 and are shown in Table 9.

**TABLE 9**

| Amount of Frigate Added (% by volume based on water) | Amount of Compound A (g/ha) | Growth Inhibition (%) | | | |
|---|---|---|---|---|---|
| | | Velvetleaf | | Common Cocklebur | |
| No addition | 60 | 80 | 80 | 98 | 98 |
| | 50 | 75 | 75 | 95 | 85 |
| | 40 | 65 | 65 | 85 | 70 |
| | 20 | 20 | 20 | 40 | 70 |
| 0.125 | 40 | 85 | 85 | 100 | 100 |
| | 20 | 65 | 65 | 80 | 80 |
| | 10 | 30 | 30 | 35 | 35 |
| 0.25 | 40 | 85 | 90 | 100 | 98 |
| | 20 | 80 | 80 | 95 | 95 |
| | 10 | 40 | 50 | 30 | 25 |
| 0.5 | 40 | 90 | - | 100 | - |
| | 20 | 80 | 80 | 98 | 98 |
| | 10 | 60 | 55 | 60 | 60 |

### TEST EXAMPLE 10

Rhizomes of johnsongrass (Sorghum halepense L.) induced to germinate were transplanted in 1/150,000-hectare pots filled with upland soil and arranged in a duplicate system. When the johnsongrass plants grew to a 3- to 6-leaf stage, the oil-based suspension concentrate obtained in Example 8 was diluted with 200 liters/hectare of water containing a predetermined amount of Frigate and was applied foliarly to the plants with a small spray gun.

Seventeen days and fifty six days after treatment (D.A.T.) the growth inhibition of plants was evaluated with visual observation in the same manner as in Test Example 1 and are shown in Table 10.

**TABLE 10**

| Amount of Frigate Added (% by volume based on water) | Amount of Compound A (g/ha) | Growth Inhibition (%) of Johnsongrass | | | |
|---|---|---|---|---|---|
| | | 17 D.A.T. | | 56 D.A.T. | |
| No addition | 40 | 65 | 70 | 100 | 98 |
| | 30 | 60 | 60 | 100 | 70 |
| | 20 | 65 | 60 | 90 | 90 |
| 0.1 | 30 | 75 | 80 | 100 | 100 |
| | 20 | 75 | 70 | 100 | 100 |
| | 10 | 65 | 70 | 100 | 90 |
| 0.2 | 30 | 85 | 80 | 100 | 98 |
| | 20 | 75 | 80 | 100 | 100 |
| | 10 | 70 | 65 | 100 | 100 |

### TEST EXAMPLE 11

Crabgrass (Digitaria sanginalis L.) seeds were sown in 1/1,000,000-hectare pots filled with upland soil and arranged in a duplicate system. When the crabgrass plants grew to a 4-leaf stage, the oil-based suspension concentrate obtained in Example 8 was diluted with 200 liters/hectare of water containing a predetermined amount of an ethoxylated fatty amine type surfactant (EFAS) and was applied foliarly to the plants with a small spray gun.

Twenty three days after treatment, the growth inhibition of plants was evaluated with visual observation in the same manner as in Test Example 1 and are shown in Table 11.

**TABLE 11**

| Kinds of EFAS (trade name) | Amount of EFAS Added (% by volume on water) | Amount of Compound A (g/ha) | Growth Inhibition (%) of Crabgrass | |
|---|---|---|---|---|
| No addition | | 40 | 98 | 98 |
| | | 20 | 98 | 90 |
| | | 10 | 70 | 55 |
| Sorpol 7376 | 0.16 | 40 | 100 | 100 |
| | | 20 | 100 | 100 |
| | | 10 | 98 | 95 |
| | | 5 | 50 | 45 |
| Sorpol 7409 | 0.16 | 40 | 100 | 98 |
| | | 20 | 90 | 100 |
| | | 10 | 75 | 95 |
| | | 5 | 65 | 60 |
| Sorpol 7553 | 0.16 | 40 | 100 | 100 |
| | | 20 | 98 | 100 |
| | | 10 | 95 | 98 |
| | | 5 | 75 | 65 |
| Sorpol 7721 | 0.16 | 40 | 100 | 100 |
| | | 20 | 100 | 100 |
| | | 10 | 98 | 98 |
| | | 5 | 65 | 75 |
| Frigate | 0.2 | 40 | 100 | 100 |
| | | 20 | 100 | 98 |
| | | 10 | 90 | 95 |
| | | 5 | 65 | 70 |

### TEST EXAMPLE 12

In field plots of 3 m² (1 m × 3 m) unit arranged in a duplicate system, seeds of corn, crabgrass (Digitaria sanguinalis L.), green foxtail (Setaria viridis L.), common lambsquarters (Chenopodium album L.), slender amaranth (Amaranthus virdis L.) and velvetleaf (Abutilon theophrasti MEDIC.) were sown and grown. Also, barnyardgrass (Echinochloa crus-galli L.), henbit (Lamiun amplexlcaule L.), pale smartweed (Polygonum lapathifolium L.) and threeseeded copperleaf (Acalypha australis L.) were allowed to grow spontaneously. When the plants grew to certain stages (corn: 6.1 to 6.5-leaf stage, crabgrass: 2.0 to 4.5-leaf stage, green foxtail: 3.0 to 4.5-leaf stage, common lambsquarters: 4.0 to 8.0-leaf stage, slender amaranth: 1.0 to 4.0-leaf stage, velvetleaf: 2.0 to 3.5-leaf stage, barnyardgrass: 3.0 to 4.5-leaf stage, henbit: 2.0 to 5.0 cm, pale smartweed: 3.0 to 5.0-leaf stage and threeseeded copperleaf: 2.0 to 4.0-leaf stage), the oil-based suspension concentrate obtained in Example 8 was diluted with 200 liters/hectare of water containing a predetermined amount of Frigate and was applied foliarly to the plants with a small spray gun.

Twenty seven days after treatment, the growth inhibition of plants except for corn plants was evaluated with visual observation in the same manner as in Test Example 1 and are shown in Table 12.

No discernible phytotoxicity was found on corn plants with visual observation.

**TABLE 12**

| Amount of Frigate Added (% by volume based on water) | Amount of Compound A (g/ha) | Growth Inhibition (%) | | | | | | | | | |
|---|---|---|---|---|---|---|---|---|---|---|---|
| | | DS | SV | CA | AV | AT | EC | LA | PL | AA | TE |
| No addition | 60 | 98 | 100 | 50 | 99 | 65 | 100 | 98 | 100 | 90 | 70 |
| | | 98 | 100 | 50 | 99 | - | 100 | 98 | - | 95 | 65 |
| | 40 | 95 | 100 | 40 | 99 | - | 100 | 98 | 90 | 90 | 70 |
| | | 95 | 100 | 60 | 99 | 70 | 100 | 98 | 70 | 90 | 70 |
| 0.2 | 60 | 99 | 100 | 99 | 99 | 95 | 100 | 98 | 98 | 90 | 99 |
| | | 99 | 100 | 99 | 99 | 100 | 100 | 98 | 90 | 98 | 99 |
| | 40 | 95 | 100 | 90 | 99 | 80 | 100 | 98 | 100 | 90 | 95 |
| | | 95 | 100 | 95 | 99 | 80 | 100 | 98 | 95 | 95 | 95 |
| | 30 | 95 | 100 | 80 | 99 | 80 | 100 | 98 | 100 | 90 | 95 |
| | | 90 | 100 | 80 | 99 | 75 | 100 | 98 | - | 95 | 90 |
| | 20 | 90 | 100 | 80 | 100 | 75 | 100 | 98 | 100 | 90 | 95 |
| | | 80 | 100 | 75 | 99 | - | 100 | 98 | 80 | 90 | 75 |
| "- ": the plant did not grow. "DS": crabgrass "CA": common lambsquarters "AT": velvetleaf "LA": henbit "AA": threeseeded copperleaf "TE": total evaluation "SV": green foxtail "AV": slender amaranth "EC": barnyardgrass "PL": pale smartweed | | | | | | | | | | | |

### TEST EXAMPLE 13

In field plots of 4 m² (1 m × 4 m) unit arranged in a duplicate system, seeds of corn, crabgrass (Digitaria sanguinalis L.) common lambsquarters (Chenopodium album L.), slender amaranth (Amaranthus viridis L.), velvetleaf (Abutilon theophrasti MEDIC.) and common cocklebur (Xanthium strumarium L.) were sown and grown. Also, green foxtail (Setaria viridis L.) and barnyardgrass (Echinochloa crus-galli L.) were allowed to grow spontaneously. When the plants grew to certain stages (corn: 4.2 to 6.0-leaf stage, crabgrass: 3.2 to 5.0-leaf stage, common lambsquarters: 3.0 to 6.0-leaf stage, slender amaranth: 2.0 to 5.0-leaf stage, velvetleaf: 1.5 to 4.0-leaf stage, common cocklebur: cotyledonal to 3.5-leaf stage, green foxtail: 3.0 to 5.0-leaf stage and barnyardgrass: 3.0 to 5.0-leaf stage), the oil-based suspension concentrate obtained in Example 8 was diluted with 200 liters/hectare of water containing a predetermined amount of Frigate and was applied foliarly to the plants with a small spray gun.

Twenty seven days after treatment, the growth inhibition of plants except for corn plants was evaluated with visual observation in the same manner as in Test Example 1 and are shown in Table 13.

On the other hand, 4 days after treatment, corn plants were examined for condition of injury (degree of discoloration and yellowing) with visual observation and the results are also shown in Table 13 (0 for no injury to 5 for severe injure).

**TABLE 13**

| Amount of Frigate Added (% by volume based on water) | Amount of Compound A (g/ha) | Injury on Corn | Growth Inhibition (%) | | | | | | | |
|---|---|---|---|---|---|---|---|---|---|---|
| | | | DS | CA | AV | AT | XS | SV | EC | TE |
| No addition | 50 | 1.0 | 85 | 65 | 95 | 70 | 70 | 80 | 100 | 75 |
| | | 1.0 | 95 | 80 | 95 | 90 | 75 | 75 | 65 | 90 |
| | 40 | 1.0 | 80 | 65 | 95 | 55 | 75 | 70 | 75 | 70 |
| | | 1.5 | 90 | 50 | 95 | 60 | 80 | - | 60 | 70 |
| | 30 | 1.0 | 75 | 45 | 90 | 30 | 25 | 65 | 65 | 50 |
| | | 1.0 | 85 | 50 | 95 | 40 | 50 | 70 | 65 | 60 |
| 0.1 | 40 | 1.0 | 90 | 95 | 95 | 65 | 70 | 65 | 100 | 85 |
| | | 1.0 | 95 | 90 | 90 | 70 | 80 | 70 | - | 90 |
| | 30 | 1.0 | 85 | 80 | 95 | 70 | 80 | 65 | - | 75 |
| | | 1.0 | 90 | 85 | 85 | 60 | 80 | 40 | - | 80 |
| 0.2 | 40 | 1.5 | 90 | 90 | 95 | 75 | 65 | 75 | 100 | 85 |
| | | 2.0 | 95 | 95 | 95 | 90 | 95 | 80 | - | 95 |
| | 30 | 1.0 | 85 | 85 | 90 | 70 | 85 | 65 | 100 | 80 |
| | | 1.5 | 95 | 90 | 95 | 85 | 85 | 80 | - | 90 |
| | 20 | 1.0 | 85 | 60 | 85 | 55 | 80 | 60 | 100 | 65 |
| | | 1.0 | 90 | 85 | 95 | 75 | 85 | 60 | - | 85 |
| "-": the plant did not grow. "DS": crabgrass "AV": slender amaranth "XS": common cocklebur "EC": barnyardgrass "TE": total evaluation "CA": common lambsquarters "AT": velvetleaf "SV": green foxtail | | | | | | | | | | |

## Claims

1. A method for activity-enhancing a herbicidal composition containing at least one sulfonylurea type herbicidal active ingredient selected from the group consisting of N-[(4,6-dimethoxypyrimidin-2-yl)aminocarbonyl]-3-dimethylaminocarbonyl-2-pyridinesulfonamide and its salts and methyl 2-[[[4,6-bis(difluoromethoxy)-pyrimidin-2-yl]aminocarbonyl]aminosulfonyl]benzoate and its salts which comprises using an ethoxylated fatty amine type surfactant and a vegetable oil and/or a mineral oil.

2. A method for activity-enhancing a herbicidal composition containing at least one sulfonylurea type herbicidal active ingredient selected from the group consisting of N-[(4,6-dimethoxypyrimidin-2-yl)aminocarbonyl]-3-dimethylaminocarbonyl-2-pyridinesulfonamide and its salts and methyl 2-[[[4,6-bis(difluoromethoxy)pyrimidin-2-yl]aminocarbonyl]aminosulfonyl]benzoate and its salts which comprises using an ethoxylated fatty amine type surfactant, a vegetable oil and/or a mineral oil and other surfactant.

3. An activity-enhanced herbicidal composition, comprising at least one sulfonylurea type herbicidal active ingredient selected from the group consisting of N-[(4,6-dimethoxypyrimidin-2-yl)aminocarbonyl]-3-dimethylaminocarbonyl-2-pyridinesulfonamide and its salts and methyl 2-[[[4,6-bis(difluoromethoxy)pyrimidin-2-yl]aminocarbonyl]aminosulfonyl]benzoate and its salts, an ethoxylated fatty amine type surfactant and a vegetable oil and/or a mineral oil.

4. An activity-enhanced herbicidal composition, comprising at least one sulfonylurea type herbicidal active ingredient selected from the group consisting of N-[(4,6-dimethoxypyrimidin-2-yl)aminocarbonyl]-3-dimethylaminocarbonyl-2-pyridinesulfonamide and its salts and methyl 2-[[[4,6-bis(difluoromethoxy)pyrimidin-2-yl]aminocarbonyl]-aminosulfonyl]benzoate and its salts, an ethoxylated fatty amine type surfactant, a vegetable oil and/or a mineral oil and other surfactant.

5. The use of an activity-enhancing composition containing an ethoxylated fatty amine type surfactant and a vegetable oil and/or a mineral oil, to enhance the activity of a herbicidal composition comprising at least one sulfonylurea type herbicidal active ingredient selected from the group consisting of N-[(4,6-dimethoxypyrimidin-2-yl)aminocarbonyl]-3-dimethylaminocarbonyl-2-pyridinesulfonamide and its salts and methyl 2-[[[4,6-bis(difluoromethoxy)pyrimidin-2-yl]aminocarbonyl]aminosulfonyl]benzoate and its salts.

6. The use of an activity-enhancing composition containing an ethoxylated fatty amine type surfactant, a vegetable oil and/or a mineral oil and other surfactant, to enhance the activity of a herbicidal composition, comprising at least one sulfonylurea type herbicidal active ingredient selected from the group consisting of N-[(4,6-dimethoxypyrimidin-2-yl)aminocarbonyl]-3-dimethylaminocarbonyl-2-pyridinesulfonamide and its salts and methyl 2-[[[4,6-bis(difluoromethoxy)pyrimidin-2-yl]aminocarbonyl]aminosulfonyl]benzoate and its salts.

7. The method for activity-enhancing a herbicidal composition according to claim 1 or 2, wherein the sulfonylurea type herbicidal active ingredient is N-[[4,6-dimethoxypyrimidin-2-yl)aminocarbonyl]-3-dimethylaminocarbonyl-2-pyridinesulfonamide and/or a salt thereof

8. The activity-enhanced herbicidal composition according to claim 3 or 4, wherein the sulfonylurea type herbicidal active ingredient is N-[(4,6-dimethoxypyrimidin-2-yl)aminocarbonyl]-3-dimethylaminocarbonyl-2-pyridinesulfonamide and/or a salt thereof.

9. The use according to claim 5 or 6, wherein the sulfonylurea type herbicidal active ingredient is N-[(4,6-dimethoxypyrimidin-2-yl)aminocarbonyl]-3-dimethylaminocarbonyl-2-pyridinesulfonamide and/or a salt thereof.

10. The method according to claim 1 or 2, wherein the sulfonylurea type herbicidal active ingredient is N-[(4,6-dimethoxypyrimidin-2-yl)aminocarbonyl]-3-dimethylaminocarbonyl-2-pyridinesulfonamideand/or a salt thereof and the vegetable oil and/or mineral oil is at least one vegetable oil selected from the group consisting of corn oil, rapeseed oil, cottonseed oil, soybean oil, sunflower oil and safflower oil and fatty acids originated therefrom and alkylesters of the fatty acids.

11. The activity-enhanced herbicidal composition according to claim 3 or 4, wherein the sulfonylurea type herbicidal active ingredient is N-[(4,6-dimethoxypyrimidin-2-yl)aminocarbonyl]-3-dimethylaminocarbonyl-2-pyridinesulfonamide and/or a salt thereof and the vegetable oil and/or mineral oil is at least one vegetable oil selected from the group consisting of corn oil, rapeseed oil, cottonseed oil, soybean oil, sunflower oil and safflower oil and fatty acids originated therefrom and alkylesters of the fatty acids.

12. The use according to claim 5 or 6, wherein the sulfonylurea type herbicidal active ingredient is N-[(4,6-dimethoxypyrimidin-2-yl)aminocarbonyl]-3-dimethylaminocarbonyl-2-pyridinesulfonamide and/or a salt thereof and the vegetable oil and/or mineral oil is at least one vegetable oil selected from the group consisting of corn oil, rapeseed oil, cottonseed oil, soybean oil, sunflower oil and safflower oil and fatty acids originated therefrom and alkylesters of the fatty acids.

13. The method according to claim 1 or 2, wherein the herbicidal composition contains N-[(4,6-dimethoxypyrimidin-2-yl)aminocarbonyl]-3-dimethylamino-carbonyl-2-pyridinesulfonamide and/or a salt thereof as the sulfonylurea type herbicidal active ingredient, and at least one other herbicidal active ingredient selected from the group consisting of 2,4-dichlorophenoxyacetic acid, its alkylesters and its salts, 3,6-dichloro-2-methoxybenzoic acid and its salts, 2-chloro-4-ethylamino-6-isopropylamino-s-triazine, 3-(1-methylethyl)-1H-2,1,3-benzothiadiazin-4(3H)-one-2,2-dioxide, 2-chloro-2',6'-diethyl-N-(methoxymethyl)acetanilide, 2-chloro-6'-ethyl-N-(2-methoxy-1-methylethyl)aceto-o-toluidide, 2-chloro-N-isopropyl-acetanilide, N-(1-ethylpropyl)-2,6-dinitro-3,4-xylidine, 2-(3,5-dichlorophenyl)-2-(2,2,2-trichloroethyl)oxirane, 3,5-dibromo-4-hydroxybenzonitrile, its carboxylic acid esters and its salts, 5,7-dimethyl-N-(2,6-dichlorophenyl)-1,2,4-triazolo[1,5-a]pyrimidine-2-sulfonamide, 2-chloro-N-(ethoxymethyl)-2'-ethyl-6'-methylacetanilide, O-(6-chloro-3-phenyl-4-pyridazinyl) S-octylcarbonothioate, 1-(4,6-dimethoxypyrimidin-2-yl)-3-(3-ethylsulfonyl-2-pyridyl-sulfonyl) urea and its salts, 2-[2-chloro-4-(methylsulfonyl)benzoyl]-1,3-cyclohexanedione and its salts, methyl 3-chloro-5-(4,6-dimethoxypyrimidin-2-ylcarbamoylsulfamoyl)-1-methylpyrazole-4-carboxylate and its salts and 3-(3,4-dichlorophenyl)-1-methoxy-1-methylurea.

14. The activity-enhanced herbicidal composition according to claim 3 or 4, wherein the sulfonylurea type herbicidal active ingredient is N-[(4,6-dimethoxypyrimidin-2-yl)aminocarbonyl]-3-dimethylaminocarbonyl-2-pyridinesulfonamide and/or a salt thereof, and further containing at least one other herbicidal active ingredient selected from the group consisting of 2,4-dichlorophenoxyacetic acid, its alkyl esters and its salts, 3,6-dichloro-2-methoxy benzoic acid and its salts, 2-chloro-4-ethylamino-6-isopropylamino-s-triazine, 3-(1-methylethyl)-1H-2,1,3-benzothiadiazin-4(3H)-one-2,2-dioxide, 2-chloro-2',6'-diethyl-N-(methoxymethyl)acetanilide, 2-chloro-6'-ethyl-N-(2-methoxy-1-methylethyl)aceto-o-toluidide, 2-chloro-N-isopropylacetanilide, N-(1-ethylpropyl)-2,6-dinitro-3,4-xylidine, 2-(3,5-dichlorophenyl)-2-(2,2,2-trichloroetnyl)oxirane, 3,5-dibromo-4-hydroxybenzonitrile, its carboxylic acid esters and its salts, 5,7-dimethyl-N-(2,6-dichlorophenyl)-1,2,4-triazolo[1,5-a]pyrimidine-2-sulfonamide, 2-chloro-N-(ethoxymethyl)-2'-ethyl-6'-methylacetanilide, O-(6-chloro-3-phenyl-4-pyridazinyl) S-octylcarbonothioate, 1-(4,6-dimethoxypyrimidin-2-yl)-3-(3-ethylsulfonyl-2-pyridylsulfonyl)urea and its salts, 2-[2-chloro-4-(methylsulfonyl)benzoyl]-1,3-cyclohexanedione and its salts, methyl 3-chloro-5-(4,6-dimethoxypyrimidin-2-ylcarbamoylsulfamoyl)-1-methylpyrazole-4-carboxylate and its salts and 3-(3,4-dichlorophenyl)-1-methoxy-1-methylurea.

15. The use according to claim 5 or 6, wherein the a herbicidal composition comprises N-[(4,6-dimethoxypyrimidin-2-yl)aminocarbonyl]-3-dimethylaminocarbonyl-2-pyridinesulfonamide and/or a salt thereof as the sulfonylurea type herbicidal active ingredient, and at least one other herbicidal active ingredient selected from the group consisting of 2,4-dichlorophenoxyacetic acid, its alkyl esters and its salts, 3,6-dichloro-2-methoxybenzoic acid and its salts, 2-chloro-4-ethylamino-6-isopropylamino-s-triazine, 3-(1-methylethyl)-1H-2,1,3-benzothiadiazin-4(3H)-one-2,2-dioxide, 2-chloro-2',6'-diethyl-N-(methoxymethyl)acetanilide, 2-chloro-6'-ethyl-N-(2-methoxy-1-methylethyl)aceto-o-toluidide, 2-chloro-N-isopropylacetanilide, N-(1-ethylpropyl)-2,6-dinitro-3,4-xylidine, 2-(3,5-dichlorophenyl)-2-(2,2,2-trichloroethyl)oxirane, 3,5-dibromo-4-hydroxybenzonitrile, its carboxylic acid esters and its salts, 5,7-dimethyl-N-(2,6-dichlorophenyl)-1,2,4-triazolo[1,5-a]pyrimidine-2-sulfonamide, 2-chloro-N-(ethoxymethyl)-2'-ethyl-6'-methylacetanilide, O-(6-chloro-3-phenyl-4-pyridazinyl) S-octylcarbonothioate, 1-(4,6-dimethoxypyrimidin-2-yl)-3-(3-ethylsulfonyl-2-pyridylsulfonyl)urea and its salts, 2-[2-chloro-4-(methylsulfonyl)benzoyl]-1,3-cyclohexanedione and its salt, methyl 3-chloro-5-(4,6-dimethoxypyrimidin-2-ylcarbamoylsulfamoyl)-1-methylpyrazole-4-carboxylate and its salts and 3-(3,4-dichlorophenyl)-1-methoxy-1-methylurea.

16. A method for activity-enhancing a herbicidal oil-based suspension containing N-[(4,6-dimethoxypyrimidin-2-yl)aminocarbonyl]-3-dimethylaminocarbonyl-2-pyridinesulfonamide and/or a salt thereof, a vegetable oil and/or a mineral oil and other surfactant, which comprises mixing the suspension with an ethoxylated fatty amine type surfactant.

17. An activity-enhanced herbicidal oil-based suspension comprising an ethoxylated fatty amine type surfactant, N-[(4,6-dimethoxypyrimidin-2-yl)aminocarbonyl]-3-dimethylaminocarbonyl-2-pyridinesulfonamide and/or a salt thereof, a vegetable oil and/or a mineral oil and other surfactant.

18. A method for activity-enhancing a herbicidal oil-based suspension containing N-[(4,6-dimethoxypyrimidin-2-yl)aminocarbonyl]-3-dimethylaminocarbonyl-2-pyridine sulfonamide and/or a salt thereof, a vegetable oil and/or a mineral oil and other surfactant and at least one other herbicidal active ingredient selected from the group consisting of 2,4-dichlorophenoxyacetic acid, its alkyl esters and its salts, 3,6-dichloro-2-methoxybenzoic acid and its salts, 2-chloro-4-ethylamino-6-isopropylamino-s-triazine, 3-(1-methylethyl)-1H-2,1,3-benzothiadiazin-4(3H)-one-2,2-dioxide, 2-chloro-2',6'-diethyl-N-(methoxymethyl)-acetanilide, 2-chloro-6'-ethyl-N-(2-methoxy-1-methyl-ethyl)aceto-o-toluidide, 2-chloro-N-isopropylacetanilide, N-(1-ethylpropyl)-2,6-dinitro-3,4-xylidine, 2-(3,5-dichlorophenyl)-2-(2,2,2-trichloroethyl)oxirane, 3,5-dibromo-4-hydroxybenzonitrile, its carboxylic acid esters and its salts, 5,7-dimethyl-N-(2,6-dichlorophenyl)-1,2,4-triazolo[1,5-a]pyrimidine-2-sulfonamide, 2-chloro-N-(ethoxymethyl)-2'-ethyl-6'-methylacetanilide, O-(6-chloro-3-phenyl-4-pyridazinyl) S-octylcarbonothioate, 1-(4,6-dimethoxypyrimidin-2-yl)-3-(3-ethylsulfonyl-2-pyridylsulfonyl)urea and its salt, 2-[2-chloro-4-(methylsulfonyl)benzoyl]-1,3-cyclohexanedione and its salts, methyl 3-chloro-5-(4,6-dimethoxypyrimidin-2-ylcarbamoylsulfamoyl)-1-methylpyrazole-4-carboxylate and its salts and 3-(3,4-dichlorophenyl)-1-methoxy-1-methylurea, which comprises mixing the suspension with an ethoxylated fatty amine type surfactant.

19. An activity-enhanced herbicidal oil-based suspension comprising an ethoxylated fatty amine type surfactant, N-[(4,6-dimethoxypyrimidin-2-yl)aminocarbon-yl]-3-dimethylaminocarbonyl-2-pyridinesulfonamide and/or a salt thereof, a vegetable oil and/or a mineral oil and other surfactant and at least one other herbicidal active ingredient selected from the group consisting of 2,4-dichlorophenoxyacetic acid, its alkyl esters and its salts, 3,6-dichloro-2-methoxybenzoic acid and its salts, 2-chloro-4-ethylamino-6-isopropylamino-s-triazine, 3-(1-methylethyl)-1H-2,1,3-benzothiadiazin-4(3H)-one-2,2-dioxide, 2-chloro-2',6'-diethyl-N-(methoxymethyl)acetanilide, 2-chloro-6'-ethyl-N-(2-methoxy-1-methylethyl)aceto-o-toluidide, 2-chloro-N-isopropylacetanilide, N-(1-ethylpropyl)-2,6-dinitro-3,4-xylidine, 2-(3,5-dichlorophenyl)-2-(2,2,2-trichloroethyl)oxirane, 3,5-dibromo-4-hydroxybenzonitrile, its carboxylic acid esters and its salts, 5,7-dimethyl-N-(2,6-dichlorophenyl)-1,2,4-triazolo[1,5-a]-pyrimidine-2-sulfonamide, 2-chloro-N-(ethoxymethyl)-2'-ethyl-6'-methylacetanilide, O-(6-chloro-3-phenyl-4-pyridazinyl) S-octylcarbonothioate, 1-(4,6-dimethoxypyrimidin-2-yl)-3-(3-ethylsulfonyl-2-pyridylsulfonyl)urea and its salts, 2-[2-chloro-4-(methylsulfonyl)benzoyl]-1,3-cyclohexanedione and its salts, methyl 3-chloro-5-(4,6-dimethoxypyrimidin-2-ylcarbamoylsulfamoyl)-1-methylpyrazole-4-carboxylate and its salts and 3-(3,4-dichlorophenyl)-1-methoxy-1-methylurea.

20. A method for activity-enhancing a herbicidal liquid for application which comprises mixing the liquid for application containing (i) a herbicidal oil-based suspension containing N-[(4,6-dimethoxypyrimidin-2-yl)aminocarbonyl]-3-dimethylaminocarbonyl-2-pyridinesulfonamide and/or a salt thereof, a vegetable oil and/or a mineral oil and other surfactant and (ii) at least one other herbicidal active ingredient selected from the group consisting of 2,4-dichlorophenoxyacetic acid, its alkyl estersand its salts, 3,6-dichloro-2-methoxybenzoic acid and its salts, 2-chloro-4-ethylamino-6-isopropylamino-s-triazine, 3-(1-methylethyl)-1H-2,1,3-benzothiadiazin-4(3H)-one-2,2-dioxide, 2-chloro-2', 6'-diethyl-N-(methoxymethyl)acetanilide, 2-chloro-6'-ethyl-N-(2-methoxy-1-methylethyl)aceto-o-toluidide, 2-chloro-N-isopropylacetanilide, N-(1-ethylpropyl)-2,6-dinitro-3,4-xylidine, 2-(3,5-dichlorophenyl)-2-(2,2,2-trichloroethyl)oxirane, 3,5-dibromo-4-hydroxybenzonitrile, its carboxylic acid esters and its salts, 5,7-dimethyl-N-(2,6-dichlorophenyl)-1,2,4-triazolo[1,5-a]pyrimidine-2-sulfonamide, 2-chloro-N-(ethoxymethyl)-2'-ethyl-6'-methylacetanilide, O-(6-chloro-3-phenyl-4-pyridazinyl) S-octylcarbonothioate, 1-(4,6-dimethoxypyrimidin-2-yl)-3-(3-ethylsulfonyl-2-pyridylsulfonyl) urea and its salts, 2-[2-chloro-4-(methylsulfonyl)benzoyl]-1,3-cyclohexanedione and its salts, methyl 3-chloro-5-(4,6-dimethoxypyrimidin-2-ylcarbamoylsulfamoyl)-1-methylpyrazole-4-carboxylate and its salts and 3-(3,4-dichlorophenyl)-1-methoxy-1-methylurea with an ethoxylated fatty amine type surfactant.

21. The method for activity-enhancing a herbicidal oil-based suspension according to claim 16 or 18, wherein the vegetable oil and/or mineral oil is at least one vegetable oil selected from the group consisting of corn oil, rapeseed oil, cottonseed oil, soybean oil, sunflower oil and safflower oil and fatty acids originated therefrom and alkylesters of the fatty acids.

22. The activity-enhanced herbicidal oil-based suspension according to claim 17 or 19, wherein the vegetable oil and/or mineral oil is at least one vegetable oil selected from the group consisting of corn oil, rapeseed oil, cottonseed oil, soybean oil, sunflower oil and safflower oil and fatty acids originated therefrom and alkylesters of the fatty acids.

23. The method for activity-enhancing a herbicidal liquid for application according to claim 20, wherein the herbicidal oil-based suspension contains at least one vegetable oil selected from the group consisting of corn oil, rapeseed oil, cottonseed oil, soybean oil, sunflower oil and safflower oil and fatty acids originated therefrom and alkylesters of the fatty acids as the vegetable oil and/or mineral oil.

24. A method for activity-enhancing a herbicidal gel composition containing N-[(4,6-dimethoxypyrimidin-2-yl)aminocarbonyl]-3-dimethylaminocarbonyl-2-pyridinesulfonamide and/or a salt thereof, a vegetable oil and/or a mineral oil, other surfactant and a gelling agent, which comprises mixing the gel composition with an ethoxylated fatty amine type surfactant.

25. An activity-enhanced herbicidal gel composition comprising an ethoxylated fatty amine type surfactant, N-[(4,6-dimethoxypyrimidin-2-yl)amino-carbonyl]-3-dimethylaminocarbonyl-2-pyridinesulfonamide and/or a salt thereof, a vegetable oil and/or a mineral oil, other surfactant and a gelling agent.

## Patentansprüche

1. Verfahren zur Steigerung der Wirksamkeit einer herbiziden Zusammensetzung, die mindestens einen herbiziden Wirkstoff des Sulfonylharnstoff-Typs, der aus der Gruppe bestehend aus N-[(4,6-Dimethoxypyrimidin-2-yl)aminocarbonyl]-3-dimethylaminocarbonyl-2-pyridinsulfonamid und seinen Salzen und Methyl-2-[[[4,6-bis(difluormethoxy)pyrimidin-2-yl]aminocarbonyl]aminosulfonyl]benzoat und seinen Salzen ausgewählt wird, enthält, das eine Verwendung eines oberflächenaktiven Mittels vom Typ ethoxyliertes Fettamin und eines pflanzlichen Mineralöls umfaßt.

2. Verfahren zur Steigerung der Wirksamkeit einer herbiziden Zusammensetzung, die mindestens einen herbiziden Wirkstoff des Sulfonylharnstoff-Typs, der aus der Gruppe bestehend aus N-[(4,6-Dimethoxypyrimidin-2-yl)aminocarbonyl]-3-dimethylaminocarbonyl-2-pyridinsulfonamid und seinen Salzen und Methyl-2-[[[4,6-bis(difluormethoxy)pyrimidin-2-yl]aminocarbonyl]aminosulfonyl]benzoat und seinen Salzen ausgewählt wird, enthält, das eine Verwendung eines oberflächenaktiven Mittels vom Typ ethoxyliertes Fettamin, eines pflanzlichen Öls und/oder eines Mineralöls und eines anderen oberflächenaktiven Mittels umfaßt.

3. Herbizide Zusammensetzung mit gesteigerter Wirksamkeit, die mindestens einen herbiziden Wirkstoff des Sulfonylharnstoff-Typs, der aus der Gruppe bestehend aus N-[(4,6-Dimethoxypyrimidin-2-yl)aminocarbonyl]-3-dimethylaminocarbonyl-2-pyridinsulfonamid und seinen Salzen und Methyl-2-[[[4,6-bis(difluormethoxy)pyrimidin-2-yl]aminocarbonyl]aminosulfonyl]benzoat und seinen Salzen ausgewählt wird, ein oberflächenaktives Mittel vom Typ ethoxyliertes Fettamin und ein pflanzliches Öl und/oder ein Mineralöl umfaßt.

4. Herbizide Zusammensetzung mit gesteigerter Wirksamkeit, die mindestens einen herbiziden Wirkstoff des Sulfonylharnstoff-Typs, der aus der Gruppe bestehend aus N-[(4,6-Dimethoxypyrimidin-2-yl)aminocarbonyl]-3-dimethylaminocarbonyl-2-pyridinsulfonamid und seinen Salzen und Methyl-2-[[[4,6-bis(difluormethoxy)pyrimidin-2-yl]aminocarbonyl]aminosulfonyl]benzoat und seinen Salzen ausgewählt wird, ein oberflächenaktives Mittel vom Typ ethoxyliertes Fettamin, ein pflanzliches Öl und/oder ein Mineralöl und weiteres oberflächenaktives Mittel umfaßt.

5. Verwendung einer Zusammensetzung zur Steigerung der Wirksamkeit, die ein oberflächenaktives Mittel vom Typ ethoxyliertes Fettamin und ein pflanzliches Öl und/oder ein Mineralöl enthält, um die Wirksamkeit einer herbiziden Zusammensetzung zu steigern, die mindestens einen herbiziden Wirkstoff des Sulfonylharnstoff-Typs, der aus der Gruppe bestehend aus N-[(4,6-Dimethoxypyrimidin-2-yl)aminocarbonyl]-3-dimethylaminocarbonyl-2-pyridinsulfonamid und seinen Salzen und Methyl-2-[[[4,6-bis(difluormethoxy)pyrimidin-2-yl]aminocarbonyl]aminosulfonyl]benzoat und seinen Salzen ausgewählt ist, enthält.

6. Verwendung einer Zusammensetzung zur Steigerung der Wirksamkeit, die ein oberflächenaktives Mittel vom Typ ethoxyliertes Fettamin, ein pflanzliches Öl und/oder ein Mineralöl und ein weiteres oberflächenaktives Mittel enthält, um die Wirksamkeit einer herbiziden Zusammensetzung zu verstärken, die mindestens einen herbiziden Wirkstoff des Sulfonylharnstoff-Typs, der aus der Gruppe bestehend aus N-[(4,6-Dimethoxypyrimidin-2-yl)aminocarbonyl]-3-dimethylaminocarbonyl-2-pyridinsulfonamid und seinen Salzen und Methyl-2-[[[4,6-bis(difluormethoxy)pyrimidin-2-yl]aminocarbonyl]aminosulfonyl]benzoat und seinen Salzen ausgewählt ist, enthält.

7. Verfahren zur Steigerung der Wirksamkeit einer herbiziden Zusammensetzung nach Anspruch 1 oder 2, wobei der herbizide Wirkstoff des Sulfonylharnstoff-Typs N-[(4,6-Dimethoxypyrimidin-2-yl)aminocarbonyl]-3-dimethylaminocarbonyl-2-pyridinsulfonamid und/oder ein Salz desselben ist.

8. Herbizide Zusammensetzung mit gesteigerter Wirksamkeit nach Anspruch 3 oder 4, in der der herbizide Wirkstoff des Sulfonylharnstoff-Typs N-[(4,6-Dimethoxypyrimidin-2-yl)aminocarbonyl]-3-dimethylaminocarbonyl-2-pyridinsulfonamid und/oder ein Salz desselben ist.

9. Verwendung nach Anspruch 5 oder 6, wobei der herbizide Wirkstoff des Sulfonylharnstoff-Typs N-[(4,6-Dimethoxypyrimidin-2-yl)aminocarbonyl]-3-dimethylaminocarbonyl-2-pyridinsulfonamid und/oder ein Salz desselben ist.

10. Verfahren nach Anspruch 1 oder 2, wobei der herbizide Wirkstoff des Sulfonylharnstoff-Typs N-[(4,6-Dimethoxypyrimidin-2-yl)aminocarbonyl]-3-dimethylaminocarbonyl-2-pyridinsulfonamid und/oder ein Salz desselben ist, und das pflanzliche Öl und/oder Mineralöl mindestens ein pflanzliches Öl ist, das aus der Gruppe bestehend aus Maisöl, Rapsöl, Baumwollsaatöl, Sojaöl, Sonnenblumenöl und Safloröl und Fettsäuren, die aus diesen stammen und Alkylestern der Fettsäuren ausgewählt ist.

11. Herbizide Zusammensetzung mit gesteigerter Wirksamkeit nach Anspruch 3 oder 4, in der der herbizide Wirkstoff des Sulfonylharnstoff-Typs N-[(4,6-Dimethoxypyrimidin-2-yl)aminocarbonyl]-3-dimethylaminocarbonyl-2-pyridinsulfonamid und/oder ein Salz desselben ist, und das pflanzliche Öl und/oder Mineralöl mindestens ein pflanzliches Öl ist, das aus der Gruppe bestehend aus Maisöl, Rapsöl, Baumwollsaatöl, Sojaöl, Sonnenblumenöl und Safloröl sowie Fettsäuren, die von diesen stammen, und Alkylestern der Fettsäuren ausgewählt ist.

12. Verwendung nach Anspruch 5 oder 6, wobei der herbizide Wirkstoff des Suflonylharnstoff-Typs N-[(4,6-Dimethoxypyrimidin-2-yl) aminocarbonyl]-3-dimethylaminocarbonyl-2-pyridinsulfonamid und/oder ein Salz desselben ist, und das pflanzliche Öl und/oder Mineralöl mindestens ein pflanzliches Öl ist, das aus der Gruppe bestehend aus Maisöl, Rapsöl, Baumwollsaatöl, Sojaöl, Sonnenblumenöl und Safloröl sowie Fettsäuren, die von diesen stammen und Alkylestern der Fettsäuren ausgewählt wird.

13. Verfahren nach Anspruch 1 oder 2, wobei die herbizide Zusammensetzung N-[(4,6-Dimethoxypyrimidin-2-yl)aminocarbonyl]-3-dimethylaminocarbonyl-2-pyridinsulfonamid und/oder ein Salz desselben als herbiziden Wirkstoff des Sulfonylharnstoff-Typs und mindestens einen weiteren herbiziden Wirkstoff, der aus der Gruppe bestehend aus 2,4-Dichlorphenoxyessigsäure, ihren Alkylestern und ihren Salzen, 3,6-Dichlor-2-methoxybenzoesäure und ihren Salzen, 2-Chlor-4-ethylamino-6-isopropylamino-s-triazin, 3-(1-Methylethyl)-1H-2,1,3-benzothiadiazin-4(3H)-on-2,2-dioxid, 2-Chlor-2',6'-diethyl-N-(methoxymnethyl)acetanilid, 2-Chlor-6'-ethyl-N-(2-methoxy-1-methylethyl)aceto-o-toluidid, 2-Chlor-N-isopropylacetanilid, N-(1-Ethylpropyl)-2,6-dinitro-3,4-xylidin, 2-(3,5-Dichlorphenyl)-2-(2,2,2-trichlorethyl)oxiran, 3,5-Dibrom-4-hydroxybenzonitril, seinen Carbonsäureestern und seinen Salzen, 5,7-Dimethyl-N-(2,6-dichlorphenyl)-1,2,4-triazolo[1,5-a]pyrimidin-2-sulfonamid, 2-Chlor-N-(ethoxymethyl)-2'-ethyl-6'-methylacetanilid, O-(6-Chlor-3-phenyl-4-pyridazinyl)-S-octylcarbonothioat, 1-(4,6-Dimethoxypyrimidin-2-yl)-3-(3-ethylsulfonyl-2-pyridinylsulfonyl)harnstoff und seinen Salzen, 2-[2-Chlor-4-(methylsulfonyl)benzoyl]-1,3-cyclohexandion und seinen Salzen, Methyl-3-chlor-5-(4,6-dimethoxypyrimidin-2-ylcarbamoylsulfamoyl)-1-methylpyrazol-4-carboxylat und seinen Salzen und 3-(3,4-Dichlorphenyl)-1-methoxy-1-methylharnstoff ausgewählt wird, enthält.

14. Herbizide Zusammensetzung mit gesteigerter Wirksamkeit nach Anspruch 3 oder 4, in der der herbizide Wirkstoff des Sulfonylharnstoff-Typs N-[(4,6-Dimethoxypyrimidin-2-yl)aminocarbonyl]-3-dimethylaminocarbonyl-2-pyridinsulfonamid und/oder ein Salz desselben ist, und die außerdem mindestens einen weiteren herbiziden Wirkstoff, der aus der Gruppe bestehend aus 2,4-Dichlorphenoxyessigsäure, ihren Alkylestern und ihren Salzen, 3,6-Dichlor-2-methoxybenzoesäure und ihren Salzen, 2-Chlor-4-ethylamino-6-isopropylamino-s-triazin, 3-(1-Methylethyl)-1H-2,1,3-benzothiadiazin-4(3H)-on-2,2-dioxid, 2-Chlor-2',6'-diethyl-N-(methoxymethyl)acetanilid, 2-Chlor-6'-ethyl-N-(2-methoxy-1-methylethyl)aceto-o-toluidid, 2-Chlor-N-isopropylacetanilid, N-(1-Ethylpropyl)-2,6-dinitro-3,4-xylidin, 2-(3,5-Dichlorphenyl)-2-(2,2,2-trichlorethyl)oxiran, 3,5-Dibrom-4-hydroxybenzonitril, seinen Carbonsäureestern und seinen Salzen, 5,7-Dimethyl-N-(2,6-dichlorphenyl)-1,2,4-triazolo[1,5-a]pyrimidin-2-sulfonamid, 2-Chlor-N-(ethoxymethyl)-2'-ethyl-6'-methylacetanilid, O-(6-Chlor-3-phenyl-4-pyridazinyl)-S-octylcarbonothioat, 1-(4,6-Dimethoxypyrimidin-2-yl)-3-(3-ethylsulfonyl-2-pyridinylsulfonyl)harnstoff und seinen Salzen, 2-[2-Chlor-4-(methylsulfonyl)benzoyl]-1,3-cyclohexandion und seinen Salzen, Methyl-3-chlor-5-(4,6-dimethoxypyridimdin-2-ylcarbamoylsulfamoyl)-1-methylpyrazol-4-carboxylat und seinen Salzen und 3-(3,4-Dichlorphenyl)-1-methoxy-1-methylharnstoff ausgewählt ist, enthält.

15. Verwendung nach Anspruch 5 oder 6, wobei die herbizide Zusammensetzung N-[(4,6-Dimethoxypyrimidin-2-yl)aminocarbonyl]-3-dimethylaminocarbonyl-2-pyridinsulfonamid und/oder ein Salz desselben als herbiziden Wirkstoff des Sulfonylharnstoff-Typs und mindestens einen weiteren herbiziden Wirkstoff, der aus der Gruppe bestehend aus 2,4-Dichlorphenoxyessigsäure, ihren Alkylestern und ihren Salzen, 3,6-Dichlor-2-methoxybenzoesäure und ihren Salzen, 2-Chlor-4-ethylamino-6-isopropylamino-s-triazin, 3-(1-Methylethyl)-1H-2,1,3-benzothiadiazin-4(3H)-on-2,2-dioxid, 2-Chlor-2',6'-diethyl-N-(methoxymethyl)acetanilid, 2-Chlor-6'-ethyl-N-(2-methoxy-1-methylethyl)aceto-o-toluidid, 2-Chlor-N-isopropylacetanilid, N-(1-Ethylpropyl)-2,6-dinitro-3,4-xylidin, 2-(3,5-Dichlorphenyl)-2-(2,2,2-trichlorethyl)oxiran, 3,5-Dibrom-4-hydroxybenzonitril, seinen Carbonsäureestern und seinen Salzen, 5,7-Dimethyl-N-(2,6-dichlorphenyl)-1,2,4-triazolo[1,5-a]pyrimidin-2-sulfonamid, 2-Chlor-N-(ethoxymethyl)-2'-ethyl-6'-methylacetanilid, O-(6-Chlor-3-phenyl-4-pyridazinyl)-S-octylcarbonothioat, 1-(4,6-Dimethoxypyrimidin-2-yl)-3-(3-ethylsulfonyl-2-pyridylsulfonyl)harnstoff und seinen Salzen, 2-[2-Chlor-4-(methylsulfonyl)benzoyl]-1,3-cyclohexandion und seinen Salzen, Methyl-3-chlor-5-(4,6-dimethoxypyrimidin-2-ylcarbamoylsulfamoyl)-1-methylpyrazol-4-carboxylat und seinen Salzen und 3-(3,4-Dichlorphenyl)-1-methoxy-1-methylharnstoff ausgewählt wird, umfaßt.

16. Verfahren zur Steigerung der Wirksamkeit einer herbiziden Suspension auf Öl-Basis, die N-[(4,6-Dimethoxypyrimidin-2-yl)aminocarbonyl]-3-dimethylaminocarbonyl-2-pyridinsulfonamid und/oder ein Salz desselben, ein pflanzliches Öl und/oder ein Mineralöl und ein weiteres oberflächenaktives Mittel enthält, das Vermischen der Suspension mit einem oberflächenaktiven Mittel vom Typ ethoxyliertes Fettamin umfaßt.

17. Herbizide Suspension auf Öl-Basis mit gesteigerter Wirksamkeit, die ein oberflächenaktives Mittel vom Typ ethoxyliertes Fettamin, N-[(4,6-Dimethoxypyrimidin-2-yl)aminocarbonyl]-3-dimethylaminocarbonyl-2-pyridinsulfonamid und/oder ein Salz desselben, ein pflanzliches Öl und/oder ein Mineralöl und ein weiteres oberflächenaktives Mittel enthält.

18. Verfahren zur Steigerung der Wirksamkeit einer herbiziden Suspension auf Öl-Basis, die N-[(4,6-Dimethoxypyrimidin-2-yl)aminocarbonyl]-3- dimethylaminocarbonyl-2-pyridinsulfonamid und/oder ein Salz desselben, ein pflanzliches Öl und/oder ein Mineralöl und ein weiteres oberflächenaktives Mittel sowie mindestens einen weiteren Wirkstoff, der aus Gruppe bestehend aus 2,4-Dichlorphenoxyessigsäure, ihren Alkylestern und ihren Salzen, 3,6-Dichlor-2-methoxybenzoesäure und ihren Salzen, 2-Chlor-4-ethylamino-6-isopropylamino-s-triazin, 3-(1-Methylethyl)-1H-2,1,3-benzothiadiazin-4(3H)-on-2,2-dioxid, 2-Chlor-2',6'-diethyl-N-(methoxymethyl)acetanilid, 2-Chlor-6'-ethyl-N-(2-methoxy-1-methylethyl)aceto-o-toluidid, 2-Chlor-N-isopropylacetanilid, N-(1-Ethylpropyl)-2,6-dinitro-3,4-xylidin, 2-(3,5-Dichlorphenyl)-2-(2,2,2-trichlorethyl)oxiran, 3,5-Dibrom-4-hydroxybenzonitril, seinen Carbonsäureestern und seinen Salzen, 5,7-Dimethyl-N-(2,6-dichlorphenyl)-1,2,4-triazolo[1,5-a]pyrimidin-2-sulfonamid, 2-Chlor-N-(ethoxymethyl)-2'-ethyl-6'-methylacetanilid, O-(6-Chlor-3-phenyl-4-pyridazinyl)-S-octylcarbonothioat, 1-(4,6-Dimethoxypyrimidin-2-yl)-3-(3-ethylsulfonyl-2-pyridinylsulfonyl)harnstoff und seinen Salzen, 2-[2-Chlor-4-(methylsulfonyl)benzoyl]-1,3-cyclohexandion und seinen Salzen, Methyl-3-chlor-5-(4,6-dimethoxypyrimidin-2-ylcarbamoylsulfamoyl)-1-methylpyrazol-4-carboxylat und seinen Salzen und 3-(3,4-Dichlorphenyl)-1-methoxy-1-methylharnstoff ausgewählt wird, enthält, das ein Vermischen der Suspension mit einem oberflächenaktiven Mittel vom Typ ethoxyliertes Fettamin umfaßt.

19. Herbizide Suspension auf Öl-Basis mit gesteigerter Wirksamkeit, die ein oberflächenaktives Mittel vom Typ ethoxyliertes Fettamin, N-[(4,6-Dimethoxypyrimidin-2-yl)aminocarbonyl]-3-dimethylaminocarbonyl-2-pyridinsulfonamid und/oder ein Salz desselben, ein pflanzliches Öl und/oder ein Mineralöl und ein weiteres oberflächenaktives Mittel sowie mindestens einen weiteren herbiziden Wirkstoff, der aus der Gruppe bestehend aus 2,4-Dichlorphenoxyessigsäure, ihren Alkylestern und ihren Salzen, 3,6-Dichlor-2-methoxybenzoesäure und ihren Salzen, 2-Chlor-4-ethylamino-6-isopropylamino-s-triazin, 3-(1-Methylethyl)-1H-2,1,3-benzothiadiazin-4(3H)-on-2,2-dioxid, 2-Chlor-2',6'-diethyl-N-(methoxymethyl)acetanilid, 2-Chlor-6'-ethyl-N-(2-methoxy-1-methylethyl)aceto-o-toluidid, 2-Chlor-N-isopropylacetanilid, N-(1-Ethylpropyl)-2,6-dinitro-3,4-xylidin, 2-(3,5-Dichlorphenyl)-2-(2,2,2-trichlorethyl)oxiran, 3,5-Dibrom-4-hydroxybenzonitril, seinen Carbonsäureestern und seinen Salzen, 5,7-Dimethyl-N-(2,6-dichlorphenyl)-1,2,4-trizolo[1,5-a]pyrimidin-2-sulfonamid, 2-Chlor-N-(ethoxymethyl)-2'-ethyl-6'-methylacetanilid, O-(6-Chlor-3-phenyl-4-pyridazinyl)-S-octylcarbonothioat, 1-(4,6-Dimethoxypyrimidin-2-yl)-3-(3-ethylsulfonyl-2-pyridinylsulfonyl)harnstoff und seinen Salzen, 2-[2-Chlor-4-(methylsulfonyl)benzoyl]-1,3-cyclohexandion und seinen Salzen, Methyl-3-chlor-5-(4,6-dimethoxypyrimidin2-ylcarbamoylsulfamoyl)-1-methylpyrazol-4-carboxylat und seinen Salzen und 3-(3,4-Dichlorphenyl)-1-methoxy-1-methylharnstoff ausgewählt ist, enthält.

20. Verfahren zur Steigerung der Wirksamkeit einer herbiziden Flüssigkeit zur Applikation, das ein Vermischen der Flüssigkeit zur Applikation, die (i) eine herbizide Suspension auf Öl-Bais, welche N-[(4,6-Dimethoxypyrimidin-2-yl)aminocarbonyl]-3-dimethylaminocarbonyl-2-pyridinsulfonamid und/oder ein Salz desselben, ein pflanzliches Öl und/oder ein Mineralöl und ein weiteres oberflächenaktives Mittel enthält, und (ii) mindestens einen weiteren herbiziden Wirkstoff, der aus der Gruppe bestehend aus 2,4-Dichlorphenoxyessigsäure, ihren Alkylestern und ihren Salzen, 3,6-Dichlor-2-methoxybenzoesäure und ihren Salzen, 2-Chlor-4-ethylamino-6-isopropylamino-s-triazin, 3-(1-Methylethyl)-1H-2,1,3-benzothiadiazin-4(3H)-on-2,2-dioxid, 2-Chlor-2',6'-diethyl-N-(methoxymethyl)acetanilid, 2-Chlor-6'-ethyl-N-(2-methoxy-1-methylethyl)aceto-o-toluidid, 2-Chlor-N-isopropylacetanilid, N-(1-Ethylpropyl)-2,6-dinitro-3,4-xylidin, 2-(3,5-Dichlorphenyl)-2-(2,2,2-trichlorethyl)oxiran, 3,5-Dibrom-4-hydroxybenzonitril, seinen Carbonsäureestern und seinen Salzen, 5,7-Dimethyl-N-(2,6-dichlorphenyl)-1,2,4-triazolo[1,5-a]pyrimidin-2-sulfonamid, 2-Chlor-N-(ethoxymethyl)-2'-ethyl-6'-methylacetanilid, O-(6-Chlor-3-phenyl-4-pyridazinyl)-S-octylcarbonothioat, 1-(4,6-Dimethoxypyrimidin-2-yl)-3-(3-ethylsulfonyl-2-pyridinylsulfonyl)harnstoff und seinen Salzen, 2-[2-Chlor-4-(methylsulfonyl)benzoyl]-1,3-cyclohexandion und seinen Salzen, Methyl-3-chlor-5-(4,6-dimethoxypyrimidin-2-ylcarbamoylsulfamoyl)-1-methylpyrazol-4-carboxylat und seinen Salzen und 3-(3,4-Dichlorphenyl)-1-methoxy-1-methylharnstoff ausgewählt ist, enthält, mit einem oberflächenaktiven Mittel des Typs ethoxyliertes Fettamin umfaßt.

21. Verfahren zur Steigerung der Wirksamkeit einer herbiziden Suspension auf Öl-Basis gemäß Anspruch 16 oder 18, wobei das pflanzliche Öl und/oder Mineralöl mindestens ein pflanzliches Öl ist, das aus der Gruppe bestehend Maisöl, Rapsöl, Baumwollsaatöl, Sojaöl, Sonnenblumenöl und Safloröl sowie Fettsäuren, die von diesen stammen, und Alkylestern der Fettsäure ausgewählt ist.

22. Herbizide Suspension auf Öl-Basis mit gesteigerter Wirksamkeit nach Anspruch 17 oder 19, in der das pflanzliche Öl und/oder Mineralöl mindestens ein pflanzliches Öl ist, das aus der Gruppe bestehend aus Maisöl, Rapsöl, Baumwollsaatöl, Sojaöl, Sonnenblumenöl und Safloröl sowie Fettsäuren, die von diesen stammen, und Alkylestern, der Fettsäuren ausgewählt ist.

23. Verfahren zur Steigerung der Wirksamkeit einer herbiziden Flüssigkeit zur Applikation nach Anspruch 20, wobei die herbizide Suspension auf Öl-Basis mindestens ein pflanzliches Öl, das aus der Gruppe bestehend aus Maisöl, Rapsöl, Baumwollsaatöl, Sojaöl, Sonnenblumenöl und Safloröl sowie Fettsäuren, die von diesen stammen und Alkylestern der Fettsäuren als das pflanzliche Öl und/oder Mineralöl enthält.

24. Verfahren zur Steigerung der Wirksamkeit einer herbiziden Gel-Zusammensetzung, die N-[(4,6-Dimethoxypyrimidin-2-yl)aminocarbonyl]-3-dimethylaminocarbonyl-2-pyridinsulfonamid und/oder ein Salz desselben, ein pflanzliches Öl und/oder ein Mineralöl, ein weiteres oberflächenaktives Mittel und ein Geliermittel enthält, das Vermischen der Gel-Zusammensetzung mit einem oberflächenaktiven Mittel des Typs ethoxyliertes Fettamin umfaßt.

25. Herbizide Gel-Zusammensetzung mit gesteigerter Wirksamkeit, die ein oberflächenaktives Mittel des Typs ethoxyliertes Fettamin N-[(4,6-Dimethoxypyrimidin-2-yl)aminocarbonyl]-3-dimethylaminocarbonyl-2-pyridinsulfonamid und/oder ein Salz desselben, ein pflanzliches Öl und/oder ein Mineralöl, ein weiteres oberflächenaktives Mittel und ein Geliermittel enthält.

## Revendications

1. Procédé pour augmenter l'activité d'une composition herbicide contenant au moins un composé actif herbicide du genre sulfonylurée choisi dans le groupe constitué par le N-[(4,6-diméthoxypyrimidin-2-yl)aminocarbonyl]-3-diméthylaminocarbonyl-2-pyridinesulfonamide et ses sels et le 2-[[[4,6-bis(difluorométhoxy)-pyrimidin-2-yl] aminocarbonyl]aminosulfonyl]benzoate de méthyle et ses sels qui comprend l'utilisation d'un tensioactif du genre amine grasse éthoxylée et une huile végétale et/ou une huile minérale.

2. Procédé pour augmenter l'activité d'une composition herbicide contenant au moins un composé actif herbicide du genre sulfonylurée choisi dans le groupe constitué par le N-[(4,6-diméthoxypyrimidin-2-yl)aminocarbonyl]-3-diméthylaminocarbonyl-2-pyridinesulfonamide et ses sels et le 2-[[[4,6-bis(difluorométhoxy)-pyrimidin-2-yl]aminocarbonyl]aminosulfonyl]benzoate de méthyle et ses sels qui comprend l'utilisation d'un tensioactif du genre amine grasse éthoxylée et une huile végétale et/ou une huile minérale et un autre tensioactif.

3. Composition herbicide d'activité augmentée comprenant au moins un composé actif herbicide du genre sulfonylurée choisi dans le groupe constitué par le N-[(4,6-diméthoxypyrimidin-2-yl)aminocarbonyl]-3-diméthylaminocarbonyl-2-pyridinesulfonamide et ses sels et le 2-[[[4,6-bis(difluorométhoxy)-pyrimidin-2-yl]aminocarbonyl]aminosulfonyl]benzoate de méthyle et ses sels qui comprend l'utilisation d'un tensioactif du genre amine grasse éthoxylée et une huile végétale et/ou une huile minérale.

4. Composition herbicide d'activité augmentée comprenant au moins un composé actif herbicide du genre sulfonylurée choisi dans le groupe constitué par le N-[(4,6-diméthoxypyrimidin-2-yl)aminocarbonyl]-3-diméthylaminocarbonyl-2-pyridinesulfonamide et ses sels et le 2-[[[4,6-bis(difluorométhoxy)-pyrimidin-2-yl]aminocarbonyl]aminosulfonyl]benzoate de méthyle et ses sels qui comprend l'utilisation d'un tensioactif du genre amine grasse éthoxylée et une huile végétale et/ou une huile minérale et un autre tensioactif.

5. Utilisation d'une composition d'activité augmentée contenant un tensioactif du genre amine grasse éthoxylée et une huile végétale et/ou une huile minérale pour augmenter l'activité d'une composition herbicide comprenant au moins un composé actif herbicide du genre sulfonylurée choisi dans le groupe constitué par le N-[(4,6-diméthoxypyrimidin-2-yl)aminocarbonyl]-3-diméthylaminocarbonyl-2-pyridinesulfonamide et ses sels et le 2-[[[4,6-bis(difluorométhoxy)-pyrimidin-2-yl]aminocarbonyl]aminosulfonyl]benzoate de méthyle et ses sels.

6. Utilisation d'une composition d'activité augmentée contenant un tensioactif du genre amine grasse éthoxylée, une huile végétale et/ou une huile minérale et un autre tensioactif pour augmenter l'activité d'une composition herbicide comprenant au moins un composé actif herbicide du genre sulfonylurée choisi dans le groupe constitué par le N-[(4,6-diméthoxypyrimidin-2-yl)aminocarbonyl]-3-diméthylaminocarbonyl-2-pyridinesulfonamide et ses sels et le 2-[[[4,6-bis(difluorométhoxy)pyrimidin-2-yl]aminocarbonyl]-aminosulfonyl[benzoate de méthyle et ses sels.

7. Procédé pour augmenter l'activité d'une composition herbicide selon la revendication 1 ou 2, caractérisé en ce que le composé actif herbicide du type sulfonylurée est le N-[(4,6-diméthoxypyrimidin-2-yl)aminocarbonyl]-3-diméthylaminocarbonyl-2-pyridinesulfonamide et/ou un sel de celui-ci.

8. Composition herbicide d'activité augmentée selon la revendication 3 ou 4, caractérisée en ce que le composé actif herbicide du type sulfonylurée est le N-[(4,6-diméthoxypyrimidin-2-yl)aminocarbonyl]-3-diméthylaminocarbonyl-2-pyridinesulfonamide et/ou un sel de celui-ci.

9. Utilisation selon la revendication 5 ou 6, caractérisée en ce que le composé actif herbicide du genre sulfonylurée est le N-[(4,6-diméthoxypyrimidin-2-yl)aminocarbonyl]-3-diméthylamino-carbonyl-2-pyridinesulfonamide et/ou un sel de celui-ci.

10. Procédé selon la revendication 1 ou 2, caractérisé en ce que le composé actif herbicide du genre sulfonylurée est le N-[(4,6-diméthoxypyrimidin-2-yl)aminocarbonyl]-3-diméthylamino-carbonyl-2-pyridinesulfonamide et/ou un sel de celui-ci et l'huile végétale et/ou l'huile minérale est au moins une huile végétale choisie dans le groupe constitué par l'huile de maïs, l'huile de colza, l'huile de graine de coton, l'huile de soja, l'huile de tournesol et l'huile de carthame et des acides gras issus de celles-ci et des alkylesters des acides gras.

11. Composition herbicide d'activité augmentée selon la revendication 3 ou 4, caractérisée en ce que le composé actif herbicide du genre sulfonylurée est le N-[(4,6-diméthoxypyrimidin-2-yl)aminocarbonyl]-3-diméthylamino-carbonyl-2-pyridinesulfonamide et/ou un sel de celui-ci et l'huile végétale et/ou l'huile minérale est au moins une huile végétale choisie dans le groupe constitué par l'huile de maïs, l'huile de colza, l'huile de graine de coton, l'huile de soja, l'huile de tournesol et l'huile de carthame et des acides gras issus de celles-ci et des alkylesters des acides gras.

12. Utilisation selon la revendication 5 ou 6, caractérisée en ce que le composé actif herbicide du genre sulfonylurée est le N-[(4,6-diméthoxypyrimidin-2-yl)aminocarbonyl]-3-diméthylamino-carbonyl-2-pyridinesulfonamide et/ou un sel de celui-ci et l'huile végétale et/ou l'huile minérale est au moins une huile végétale choisie dans le groupe constitué par l'huile de maïs, l'huile de colza, l'huile de graine de coton, l'huile de soja, l'huile de tournesol et l'huile de carthame et des acides gras issus de celles-ci et des alkylesters des acides gras.

13. Procédé selon la revendication 1 ou 2, caractérisé en ce que la composition herbicide contient le N-[(4,6-diméthoxypyrimidin-2-y)aminocarbonyl]-3-diméthylamino-carbonyl-2-pyridinesulfonamide et/ou un sel de celui-ci comme composé actif herbicide du genre sulfonylurée, et au moins un autre composé actif herbicide choisi dans le groupe constitué par l'acide 2,4-dichlorophénoxyacétique, ses alkylesters et ses sels, l'acide 3,6-dichloro-2-méthoxybenzoïque et ses sels, la 2-chloro-4-éthylamino-6-isopropylamino-s-triazine le 3-(1-méthylhétyl)-1H-2,1,3-benzothiadiazin-4(3H)-one-2,2-dioxyde, le 2-chloro-2',6',-diéthyl-N-(méthoxyméthyl)acétanilide le 2-chloro-6'-éthyl-N-(2-méthoxy-1-méthyléthyl)acéto-o-toluidide, le 2-chloro-N-isopropylacétanilide, la N-(1-éthylpropyl)-2,6-dinitro-3,4-xylidine le 2-(3,5-dichlorophényl)-2-(2,2,2-trichloroéthyl)oxirane, le 3,5-dibromo-4-hydroxybenzonitrile, ses esters d'acide carboxylique et ses sels, le 5,7-diméthyl-N-(2,6-dichlorophényl)-1,2,4-triazolo[1,5-a)pyrimidine-2-sulfonamide, le 2-chloro-N-(éthoxy-méthyl)-2'-éthyl-6'-méthylacétanilide, le S-octylcarbonothioate de O-(6-chloro-3-phényl-4-pyridazinyl), la 1-(4,6-diméthoxypyrimidin-2-yl)-3-(3-éthylsulfonyl-2-pyridylsulfonyl)urée et ses sels, la 2-[2-chloro-4-(méthylsulfonyl)benzoyl]-1,3-cyclohexanedione et ses sels, le 3-chloro-5-(4,6-diméthoxypyrimidin-2-ylcarbamoylsulfamoyl)-1-méthylpyrazole-4-carboxylate de méthyle et ses sels et la 3-(3,4-dichlorophényl)-1-méthoxy-1-méthylurée.

14. Composition herbicide d'activité augmentée selon la revendication 3 ou 4, caractérisée en ce que le composé actif herbicide du genre sulfonylurée est le N-[(4,6-diméthoxypyrimidin-2-yl)aminocarbonyl]-3-diméthylamino-carbonyl-2-pyridinesulfonamide et/ou un sel de celui-ci et contenant en outre au moins un autre composé actif herbicide choisi dans le groupe constitué par l'acide 2,4-dichlorophénoxyacétique, ses alkylesters et ses sels, l'acide 3,6-dichloro-2-méthoxybenzoïque et ses sels, la 2-chloro-4-éthylamino-6-isopropylamino-s-triazine, le 3-(1-méthylhétyl)-1H-2,1,3-benzothiadiazin-4-(3H)-one-2,2-dioxyde, le 2-chloro-2',6',-diéthyl-N-(méthoxyméthyl)acétanilide, le 2-chloro-6'-ethyl-N-(2-méthoxy-1-méthyléthyl)acéto-o-toluidide, le 2-chloro-N-isopropylacétanilide, la N-(1-éthylpropyl)-2,6-dinitro-3,4-xylidine, le 2-(3,5-dichlorophényl)-2-(2,2,2-trichloroéthyl)oxirane, le 3,5-dibromo-4-hydroxybenzonitrile, ses esters d'acide carboxylique et ses sels, le 5,7-diméthyl-N-(2,6-dichlorophényl)-1,2,4-triazolo[1,5-a]pyrimidine-2-sulfonamide, le 2-chloro-N-(éthoxyméthyl)-2'-éthyl-6'-méthylacétanilide, le S-octylcarbonothioate de O-(6-chloro-3-phényl-4-pyridazinyl), la 1-(4,6-diméthoxypyrimidin-2-yl)-3-(3-éthylsulfonyl-2-pyridylsulfonyl)urée et ses sels, la 2-[2-chloro-4-(méthylsulfonyl)benzoyl]-1,3-cyclohexanedione et ses sels, le 3-chloro-5-(4,6-diméthoxypyrimidin-2-ylcarbamoylsulfamoyl)-1-méthylpyrazole-4-carboxylate de méthyle et ses sels et la 3-(3,4-dichlorophényl)-1-méthoxy-1-méthylurée.

15. Utilisation selon la revendication 5 ou 6, caractérisée en ce que la composition herbicide comprend le N-[(4,6-diméthoxypyrimidin-2-yl)-aminocarbonyl]-3-diméthylamino-carbonyl-2-pyridinesulfonamide et/ou un sel de celui-ci comme composé actif herbicide du genre sulfonylurée, et au moins un autre composé actif herbicide choisi dans le groupe constitué par l'acide 2,4-dichlorophénoxyacétique, ses alkylesters et ses sels, l'acide 3,6-dichoro-2-méthoxybenzoïque et ses sels, la 2-chloro-4-éthylamino-6-isopropylamino-s-triazine le 3-(1-méthylhétyl)-1H-2,1,3-benzothiadiazin-4(3H)-one-2,2-dioxyde, le 2-chloro-2',6',-diéthyl-N-(méthoxyméthyl)acétanilide, le 2-chloro-6'-éthyl-N-(2-méthoxy-1-méthyléthyl)acéto-o-toluidide, le 2-chloro-N-isopropyl-acétanilide, la N-(1-éthylpropyl)-2,6-dinitro-3,4-xylidine, le 2-(3,5-dichlorophényl)-2-(2,2,2-trichloroéthyl)oxirane, le 3,5-dibromo-4-hydroxy-benzonitrile, ses esters d'acide carboxylique et ses sels, le 5,7-diméthyl-N-(2,6-dichlorophényl)-1,2,4-triazolo[1,5-a]pyrimidine-2-sulfonamide, le 2-chloro-N-(éthoxy-méthyl)-2'-éthyl-6'-méthylacétanilide, le S-octylcarbonothioate de O-(6-chloro-3-phényl-4-pyridazinyl), la 1-(4,6-diméthoxypyrimidin-2-yl)-3-(3-éthylsulfonyl-2-pyridylsulfonyl)urée et ses sels, la 2-[2-chloro-4-(méthylsulfonyl)benzoyl]-1,3-cyclohexanedione et ses sels, le 3-chloro-5-(4,6-diméthoxypyrimidin-2-ylcarbamoylsulfamoyl)-1-méthylpyrazole-4-carboxylate de méthyle et ses sels et la 3-(3,4-dichlorophényl)-1-méthoxy-1-méthylurée.

16. Procédé pour augmenter l'activité d'une suspension à base huileuse herbicide contenant le N-((4,6-diméthoxypyrimidin-2-yl)aminocarbonyl]-3-diméthylamino-carbonyl-2-pyridinesulfonamide et/ou un sel de celui-ci, une huile végétale et/ou une huile minérale et un autre tensioactif, qui comprend le mélange de la suspension avec un tensioactif du genre amine grasse éthoxylée.

17. Suspension à base huileuse herbicide d'activité augmentée comprenant un tensioactif du genre amine grasse éthoxylée, le N-[(4,6-diméthoxypyrimidin-2-yl)aminocarbonyl]-3-diméthylamino-carbonyl-2-pyridinesulfonamide et/ou un sel de celui-ci, une huile végétale et/ou une huile minérale et un autre tensioactif.

18. Procédé pour augmenter l'activité d'une suspension à base huileuse contenant le N-[(4,6-diméthoxypyrimidin-2-yl)aminocarbonyl]-3-diméthyl-amino-carbonyl-2-pyridinesulfonamide et/ou un sel de celui-ci, une huile végétale et/ou une huile minérale et un autre tensioactif et au moins un autre composé actif herbicide choisi dans le groupe constitué par l'acide 2,4-dichlorophénoxyacétique, ses alkylesters et ses sels, l'acide 3,6-dichloro-2-méthoxybenzoïque et ses sels, la 2-chloro-4-éthylamino-6-isopropylamino-s-triazine, le 3-(1-méthylhétyl)-1H-2,1,3-benzothiadiazin-4(3H)-one-2,2-dioxyde, le 2-chloro-2',6',-diéthyl-N-(méthoxyméthyl)acétanilide, le 2-chloro-6'-éthyl-N-(2-méthoxy-1-méthyléthyl)acéto-o-toluidide, le 2-chloro-N-isopropyl-acétanilide, la N-(1-éthyl-propyl)-2,6-dinitro-3,4-xylidine, le 2-(3,5-dichlorophényl)-2-(2,2,2-trichloroéthyl)oxirane, le 3,5-dibromo-4-hydroxy-benzonitrile, ses esters d'acide carboxylique et ses sels, le 5,7-diméthyl-N-(2,6-dichlorophényl)-1,2,4-triazolo[1,5-a]pyrimidine-2-sulfonamide, le 2-chloro-N-(éthoxy-méthyl)-2'-éthyl-6'-méthylacétanilide, le S-octylcarbonothioate de O-(6-chloro-3-phényl-4-pyridazinyl), la 1-(4,6-diméthoxypyrimidin-2-yl)-3-(3-éthylsulfonyl-2-pyridylsulfonyl)urée et ses sels, la 2-[2-chloro-4-(méthylsulfonyl)benzoyl]-1,3-cyclohexanedione et ses sels, le 3-chloro-5-(4,6-diméthoxypyrimidin-2-ylcarbamoylsulfamoyl)-1-méthylpyrazole-4-carboxylate de méthyle et ses sels et la 3-(3,4-dichlorophényl)-1-méthoxy-1-méthylurée, qui comprend le mélange de la suspension avec un tensioactif du genre amine grasse éthoxylée.

19. Suspension à base huileuse herbicide d'activité augmentée comprenant un tensioactif du genre amine grasse éthoxylée, le N-[(4,6-diméthoxypyrmidin-2-yl)aminocarbonyl]-3-diméthyl-amino-carbonyl-2-pyridinesulfonamide et/ou un sel de celui-ci, une huile végétale et/ou une huile minérale et un autre tensioactif et au moins un autre composé actif herbicide choisi dans le groupe constitué par l'acide 2,4-dichlorophénoxyacétique, ses alkylesters et ses sels, l'acide 3,6-dichloro-2-méthoxybenzoïque et ses sels, la 2-chloro-4-éthylamino-6-isopropylamino-s-triazine, le 3-(1-méthylhétyl)-1H-2,1,3-benzothiadiazin-4(3H)-one-2,2-dioxyde, le 2-chloro-2',6',-diéthyl-N-(méthoxyméthyl)acétanilide, le 2-chloro-6'-ethyl-N-(2-méthoxy-1-méthyléthyl)acéto-o-toluidide, le 2-chloro-N-isopropyl-acétanilide, la N-(1-éthyl-propyl)-2,6-dinitro-3,4-xylidine, le 2-(3,5-dichlorophényl)-2-(2,2,2-trichloroéthyl)-oxirane, le 3,5-dibromo-4-hydroxybenzonitrile, ses esters d'acide carboxylique et ses sels, le 5,7-diméthyl-N-(2,6-dichlorophényl)-1,2,4-triazolo[1,5-a]pyrimidine-2-sulfonamide, le 2-chloro-N-(éthoxy-méthyl)-2'-éthyl-6'-méthylacétanilide, le S-octylcarbonothioate de O-(6-chloro-3-phényl-4-pyridazinyl), la 1-(4,6-diméthoxypyrimidin-2-yl)-3-(3-éthylsulfonyl-2-pyridylsulfonyl)urée et ses sels, la 2-[2-chloro-4-(méthylsulfonyl)benzoyl]-1,3-cyclohexanedione et ses sels, le 3-chloro-5-(4,6-diméthoxypyrimidin-2-ylcarbamoylsulfamoyl)-1-méthylpyrazole-4-carboxylate de méthyle et ses sels et la 3-(3,4-dichlorophényl)-1-méthoxy-1-méthylurée.

20. Procédé pour augmenter l'activité d'un liquide herbicide à appliquer qui comprend le mélange du liquide à appliquer contenant (i) une suspension à base huileuse herbicide contenant le N-[(4,6-diméthoxypyrimdn-2-yl)aminocarbonyl]-3-diméthyl-amino-carbonyl-2-pyridinesulfonamide et/ou un sel de celui-ci, une huile végétale et/ou une huile minérale et un autre tensioactif et (ii) au moins un autre composé actif herbicide choisi dans le groupe constitué par l'acide 2,4-dichlorophénoxyacétique, ses alkylesters et ses sels, l'acide 3,6-dichloro-2-méthoxybenzoïque et ses sels, la 2-chloro-4-éthylamino-6-isopropylamino-s-triazine, le 3-(1-méthylhétyl)-1H-2,1,3-benzothiadiazin-4(3H)-one-2,2-dioxyde, le 2-chloro-2',6',-diéthyl-N-(méthoxyméthyl)acétanilide, le 2-chloro-6'-ethyl-N-(2-méthoxy-1-méthyléthyl)acéto-o-toluidide, le 2-chloro-N-isopropyl-acétanilide, la N-(1-éthyl-propyl)-2,6-dinitro-3,4-xylidine, le 2-(3,5-dichlorophényl)-2-(2,2,2-trichloroéthyl)oxirane, le 3,5-dibromo-4-hydroxy-benzonitrile, ses esters d'acide carboxylique et ses sels, le 5,7-diméthyl-N-(2,6-dichlorophényl)-1,2,4-triazolo[1,5-a]pyrimidine-2-sulfonamide, le 2-chloro-N-(éthoxyméthyl)-2'-éthyl-6'-méthylacétanilide, le S-octylcarbonothioate de O-(6-chloro-3-phényl-4-pyridazinyl), la 1-(4,6-diméthoxypyrimidin-2-yl)3-(3-éthylsulfonyl-2-pyridylsulfonyl)urée et ses sels, la 2-[2-chloro-4-(méthylsulfonyl)benzoyl]-1,3-cyclohexanedione et ses sels, le 3-chloro-5-(4,6-diméthoxypyrimidin-2-ylcarbamoylsulfamoyl)-1-méthylpyrazole-4-carboxylate de méthyle et ses sels et la 3-(3,4-dichlorophényl)-1-méthoxy-1-méthylurée avec un tensioactif du genre amine grasse éthoxylée.

21. Procédé pour augmenter l'activité d'une suspension à base huileuse herbicide selon la revendication 16 ou 18, caractérisé en ce que l'huile végétale et/ou l'huile minérale est au moins une huile végétale choisie dans le groupe constitué par l'huile de maïs, l'huile de colza, l'huile de graine de coton, l'huile de soja, l'huile de tournesol et l'huile de carthame et des acides gras issus de celles-ci et des alkylesters des acides gras.

22. Suspension à base huileuse herbicide d'activité augmentée selon la revendication 17 ou 19, caractérisée en ce que l'huile végétale et/ou l'huile minérale est au moins une huile végétale choisie dans le groupe constitué par l'huile de maïs, l'huile de colza, l'huile de graine de coton, l'huile de soja, l'huile de tournesol et l'huile de carthame et des acides gras issus de celles-ci et des alkylesters des acides gras.

23. Procédé pour augmenter l'activité d'un liquide herbicide à' appliquer selon la revendication 20, caractérisé en ce que la suspension à base huileuse herbicide contient au moins une huile végétale choisie dans le groupe constitué par l'huile de maïs, l'huile de colza, l'huile de graine de coton, l'huile de soja, l'huile de tournesol et l'huile de carthame et des acides gras issus de celles-ci et des alkylesters des acides gras comme huile végétale et/ou huile minérale.

24. Procédé pour augmenter l'activité d'une composition de gel herbicide contenant le N-[(4,6-diméthoxypyrimidin-2-yl)aminocarbonyl]-3-diméthyl-amino-carbonyl-2-pyridinesulfonamide et/ou un sel de celui-ci, une huile végétale et/ou une huile minérale, un autre tensioactif et un agent de gélification, qui comprend le mélange de la composition de gel avec un tensioactif du genre amine grasse éthoxylée.

25. Composition de gel herbicide d'activité augmentée comprenant un tensioactif du genre amine grasse éthoxylée, le N-[(4,6-diméthoxypyrimidin-2-yl)aminocarbonyl]-3-diméthyl-amino-carbonyl-2-pyridinesulfonamide et/ou un sel de celui-ci, une huile végétale et/ou une huile minérale, un autre tensioactif et un agent de gélification.
